# EUROPEAN PATENT APPLICATION

(11) **EP 3 693 422 A1**
(43) Date of publication of application: **12.08.2020**
(21) Application number: 18864176.5
(22) Date of filing: 21.09.2018
(51) Int. Cl.: C09D 201/00, B32B 15/04, B32B 15/18, C09D 7/61, C09D 7/63, C09D 7/65, C23C 26/00

(54) **COATING MATERIAL AND COATED STEEL**

(30) Priority: 06.10.2017 JP 2017196292; 13.04.2018 WO PCT/JP2018/015551
(71) Applicant: Kyoto Materials Co., Ltd., Kyoto-shi, Kyoto 615-8245 (JP); Nagase & Co., Ltd., Osaka 550-8668 (JP)
(72) Inventor: YAMASHITA, Masato, Kyoto-shi Kyoto 615-8245 (JP)
(74) Representative: Winter, Brandl, Fürniss, Hübner, Röss, Kaiser, Polte - Partnerschaft mbB
(86) International application number: PCT/JP2018/035127
(87) International publication number: WO 2019/069722

(57) **Abstract**

Provided is a coating material including particles of at least one compound selected from the group consisting of calcium oxide, calcium hydroxide, strontium oxide, and strontium hydroxide, and particles of a metal sulfate. In the coating material, a soluble amount of the metal sulfate in 100 g of water is 0.5 g or more at 5°C; an average particle diameter of the particles of the compound is 17 µm or less, an average particle diameter of the particles of the metal sulfate is 17 µm or less, a content of the particles of the compound is 0.10 to 50.0% by mass with respect to a total solid content of the coating material, and a content of the particles of the metal sulfate is 0.05 to 30.0% by mass with respect to the total solid content of the coating material.

## Description

### Technical Field

The present invention relates to a coating material and a coated steel material. The present invention more specifically relates to a coating material for enhancing corrosion resistance of a steel material by application to a steel material, a steel material covered with a rust layer due to oxidation-corrosion, or a steel material covered with an organic layer or an inorganic layer (hereinafter sometimes collectively simply referred to as a steel material), and also relates to a steel material (coated steel material) having a coating film formed thereon by applying the coating material.

### Background Art

It is generally known that when an oxide layer having a high environmental barrier property is formed on a surface of steel, corrosion resistance of the steel is improved. For example, stainless steel forms a passive film which is an oxide layer having a high environmental barrier property, thereby exhibiting high corrosion resistance. However, the stainless steel has many restrictions in uses for structures and machines for reasons that it is expensive; also has problems in terms of corrosion resistance such as occurrence of pitting corrosion due to being a high-alloy steel, and the like; and has deterioration in mechanical properties such as strength, toughness, and the like, as compared with a low-alloy steel; and others reasons.

In addition, weather-resistant steel obtained by the addition of a small amount of an element such as P, Cu, Cr, Ni, and the like is a low-alloy steel which can form rust that is protective against corrosion (protective rust) with the progress of corrosion when placed outside, thus to improve corrosion resistance of the steel in the atmosphere, and is thus capable of reducing a necessity for an anti-corrosion treatment operation such as subsequent coating and the like. However, there were problems in that it took as long a period of time as approximately ten years or longer for the weather-resistant steel before formation of the protective rust; floating rust or flowing rust of red rust, yellow rust, or the like occurred due to corrosion at an initial stage in the above period of time, which was not only unfavorable in appearance but also caused remarkable damages such as a decrease in a plate thickness due to corrosion, and the like. In particular, in an acidic environment or a severe corrosive environment including chlorides, protective rust was not even formed and sufficient corrosion resistance was not secured in some cases. In order to solve the problems, for example, in Patent Literature 1, a surface treatment method in which a phosphate film is formed on a steel material has been proposed.

On the other hand, examples of a general means for securing the corrosion resistance of a steel material include coating of a surface of a steel material. However, the coating cannot prevent the progress of corrosion resulting from deterioration of a coating film or defects of the coating film even in an ordinary corrosive environment, and only slows down the progress of corrosion. For example, there is a coating means exhibiting an high anti-corrosion property, such as a zinc-rich primer, a zinc-rich paint, or the like using a sacrificial anti-corrosion action with zinc dust, but this can only exert the effect restrictively in a relatively short period of time, and thus, the progress of corrosion resulting from deterioration of the coating film or defects of the coating film cannot be essentially prevented. In addition, in a case where a content of zinc dust is increased or the coating film is thickened in an attempt to increase the sacrificial anti-corrosion effect, remarkable damages in adhesiveness to or workability with a steel material are resulted. With regard to such problems, Patent Literature 2 discloses that corrosion resistance can be improved by a treatment in which an inorganic zinc-rich paint is applied onto a steel material and a solution including a Mg compound is applied onto a surface of rhe coating film.

In addition, in Patent Literatures 3 and 4, a coating material to be applied onto a steel material is disclosed. The coating material disclosed in these literatures is different from the above-mentioned coating materials which cannot prevent the progress of corrosion resulting from deterioration of a coating film or defects of the coating film. With a steel material having a film formed from the coating material provided on the surface, an oxide layer having corrosion resistance is formed early at an interface between the film and the steel material, as accompanied with a corrosion reaction of the steel material after forming the film, and thus, the corrosion resistance of the steel material can be obtained with the oxide layer.

### Citation List

### Patent Literature

Patent Literature 1: Japanese Unexamined Patent Publication No. H1-142088
Patent Literature 2: Japanese Unexamined Patent Publication No. 2017-35877
Patent Literature 3: Japanese Unexamined Patent Publication No. 2001-234369
Patent Literature 4: International Publication WO 2014/020665

### Summary of Invention

### Technical Problem

However, by the surface treatment method disclosed in Patent Literature 1, sufficient corrosion resistance could be not obtained, and the method was not compatible with an acidic environment or a severe corrosive environment including chlorides although it was compatible with an ordinary corrosive environment. In addition, it was necessary to perform a separate pretreatment before the formation of a phosphate film, and thus, the treatment process was complicated. Furthermore, a number of rust-stabilizing auxiliary treatment materials for use in the same surface treatment method have been developed, but these were essentially intended to assist an anti-corrosion function of a low-alloy steel and were not compatible with an acidic environment or a severe corrosive environment including chlorides.

Moreover, also with regard to the treatment disclosed in Patent Literature 2, an improvement ratio in the corrosion resistance improvement relative to non-treatment is only approximately three times at most, and it could not be said that the treatment provided sufficient corrosion resistance in an acidic environment or a severe corrosive environment including chlorides although it could be said that the treatment was compatible with an ordinary corrosive environment.

Furthermore, such a zinc-rich paint is intended to be applied onto a surface of a clean steel material obtained by application of shot blasting or the like, and does not exhibit a high anti-corrosion property when applied to a steel material covered with a rust layer due to oxidation·corrosion.

The oxide layer formed at the interface between the film and the steel material disclosed in Patent Literatures 3 and 4 exhibited high corrosion resistance and was sufficiently compatible with an ordinary corrosive environment, but it could not be said that the oxide layer was sufficiently compatible with an acidic environment or a severe corrosive environment including chlorides.

The present invention has been made in view of the circumstances, and has an object to provide a coating material capable of providing high corrosion resistance for a steel material and the like in an acidic environment or a severe corrosive environment including chlorides, and a coated steel material obtained using the same.

### Solution to Problem

The present invention provides a coating material including particles of at least one compound selected from the group consisting of calcium oxide, calcium hydroxide, strontium oxide, and strontium hydroxide, and particles of a metal sulfate. In the coating material, a soluble amount of the metal sulfate in 100 g of water is 0.5 g or more at 5°C. Further, an average particle diameter of the particles of the compound is 17 µm or less and an average particle diameter of the particles of the metal sulfate is 17 µm or less. In addition, a content of the particles of the compound is 0.10 to 50.0% by mass with respect to a total solid content of the coating material and a content of the particles of the metal sulfate is 0.05 to 30.0% by mass with respect to the total solid content of the coating material. With regard to a steel material and the like having the coating material applied thereon, the components of the coating material react with the steel material and the substances in the corrosive environment to form an anti-corrosion compound layer, thereby providing high corrosion resistance in an acidic environment or a severe corrosive environment including chlorides.

The coating material preferably further includes a coupling agent, and a content of the coupling agent is preferably 10.0% by mass or less with respect to the total solid content of the coating material. By incorporating the coupling agent into the coating material, the adhesiveness among the compound particles constituting the anti-corrosion compound layer is improved, and thus, a higher anti-corrosion property can be easily obtained.

The coating material preferably further includes phosphoric acid, and a content of the phosphoric acid is preferably 10.0% by mass or less with respect to the total solid content of the coating material. By incorporating the phosphoric acid into the coating material, the adhesiveness between the coating film and the steel material can be improved.

The coating material preferably further includes at least one metal powder selected from the group consisting of aluminum powder, zinc powder, and alloy powder containing aluminum and zinc, and a content of the metal powder is preferably 80.0% by mass or less with respect to the total solid content of the coating material. By incorporating the metal powder into the coating material, the metal powder in the coating film can assist a sacrificial anti-corrosion action of a plated metal in a plated steel material and the like in which the plated metal is already worn out due to corrosion or the like.

The coating material preferably further includes cellulose nanofibers, and a content of the cellulose nanofibers is preferably 5.0% by mass or less with respect to the total solid content of the coating material. By incorporating the cellulose nanofibers into the coating material, the fineness of crystal particles constituting the anti-corrosion compound layer is increased to enhance cohesiveness, and thus, the corrosion resistance of a steel material can be further improved.

The present invention also provides a coated steel material including a steel material and a coating film formed on a surface of the steel material. In the coated steel material, the coating film includes particles of at least one compound selected from the group consisting of calcium oxide, calcium hydroxide, strontium oxide, and strontium hydroxide, and particles of a metal sulfate. A soluble amount of the metal sulfate in 100 g of water is 0.5 g or more at 5°C, an average particle diameter of the particles of the compound is 17 µm or less, an average particle diameter of the particles of the metal sulfate is 17 µm or less. A content of the particles of the compound is 0.10 to 50.0% by mass with respect to the total amount of the coating film, and a content of the particles of the metal sulfate is 0.05 to 30.0% by mass with respect to the total amount of the coating film. The coated steel material has high corrosion resistance in an acidic environment or a severe corrosive environment including chlorides.

In the coated steel material, the coating film preferably has a moisture permeability of 300 g/(m²·24 h) or less at a dry film thickness of 100 µm. By allowing the coating film to have the moisture permeability, it is difficult for calcium oxide, calcium hydroxide, strontium oxide, strontium hydroxide, metal sulfate, and the like to flow out to the outside in a corrosive environment, and thus, the coating film is easily effectively provided for the formation of an anti-corrosion compound layer.

The coated steel material preferably further includes a topcoating film arranged on the coating film, and the topcoating film preferably includes at least one layer of (A) to (C) below. By allowing the coated steel material to further include the topcoating film, it becomes possible to further improve the corrosion resistance of the steel material.
(A) A layer which has a moisture permeability of 300 g/(m²·24 h) or less at a dry film thickness of 100 µm.
(B) A layer which contains at least one compound selected from the group consisting of barium oxide, barium hydroxide, calcium oxide, calcium hydroxide, strontium oxide, and strontium hydroxide; and does not contain a metal sulfate whose soluble amount in 100 g of water is 0.5 g or more at 5°C or contains the metal sulfate so that a ratio of the total mass of the metal sulfate to the total mass of the compound is 5.0% by mass or less.
(C) A layer which contains a metal sulfate whose soluble amount in 100 g of water is 0.5 g or more at 5°C; and does not contain at least one compound selected from the group consisting of barium oxide, barium hydroxide, calcium oxide, calcium hydroxide, strontium oxide, and strontium hydroxide or contains the compound so that a ratio of the total mass of the compound to the total mass of the metal sulfate is 5.0% by mass or less.

The topcoating film preferably includes the layer of (B) and the layer of (C), and more preferably includes all the layers of (A) to (C). With this configuration, it is possible to prevent excessive corrosion before the formation of an anti-corrosion compound layer while exerting an effect of making the anti-corrosion compound layer firm.

Furthermore, the metal sulfate in the layer of (C) preferably exhibits a pH of 5.5 or less in an aqueous solution thereof at a temperature 5°C and a concentration of 1 mol/L. In addition, the metal sulfate preferably contains at least one selected from the group consisting of aluminum sulfate, iron sulfate (II), iron sulfate (III), copper sulfate, and chromium sulfate (III). With this configuration, sulfuric acid is easily supplied to the coating film side and a firm anti-corrosion compound layer can be more easily obtained.

### Advantageous Effects of Invention

According to the present invention, it is possible to provide a coating material capable of providing high corrosion resistance for a steel material and the like in an acidic environment or a severe corrosive environment including chlorides, and a coated steel material obtained using the same.

### Brief Description of Drawings

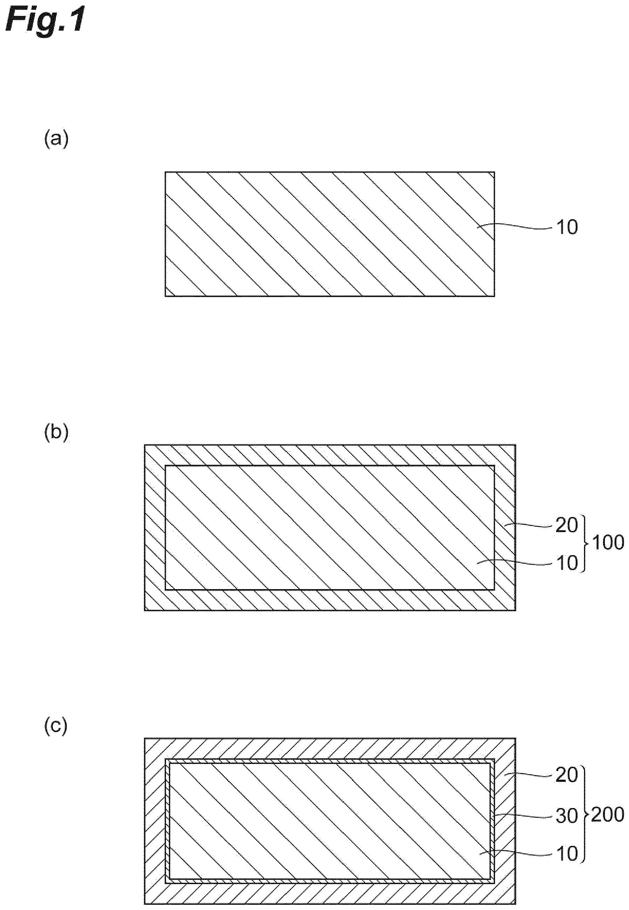

FIG. 1 is a cross-sectional view illustrating a coated steel material according to an embodiment of the present invention, and a corrosion-resistant steel structure obtained therefrom, FIG. 1(a) illustrates a steel material, FIG. 1(b) illustrates a coated steel material including the steel material and a coating film on a surface of the steel material, and FIG. 1(c) illustrates a corrosion-resistant steel structure having an anti-corrosion compound layer formed between the steel material and the coating film.

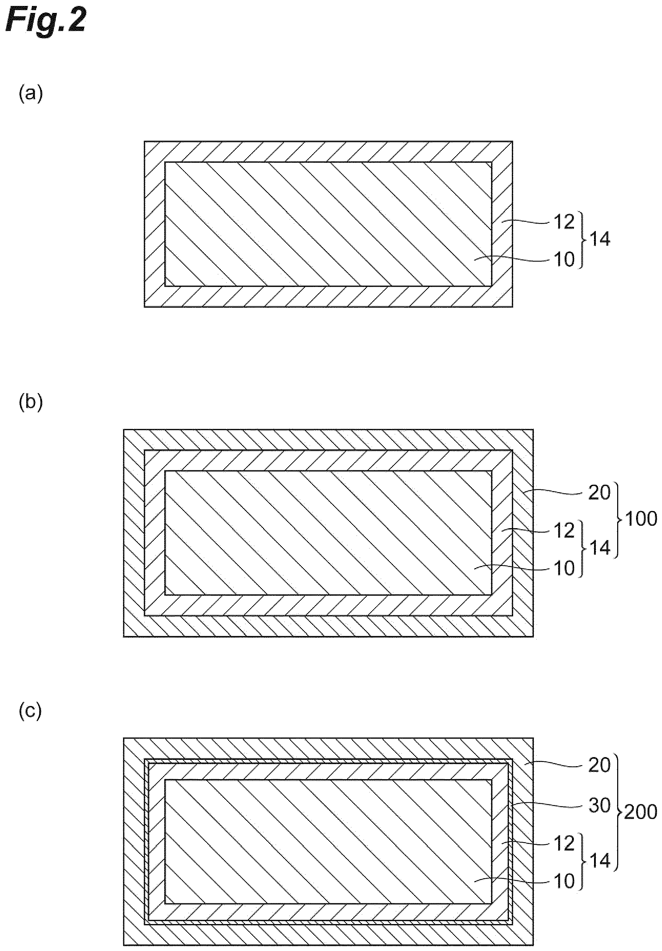

FIG. 2 is a cross-sectional view illustrating a coated steel material obtained using a coating material according to another embodiment of the present invention, and a corrosion-resistant steel structure obtained therefrom, FIG. 2(a) illustrates a plated steel material, FIG. 2(b) illustrates a coated steel material having the plated steel material and a coating film on a surface of the plated steel material, and FIG. 2(c) illustrates a corrosion-resistant steel structure having an anti-corrosion compound layer formed between the plated steel material and the coating film.

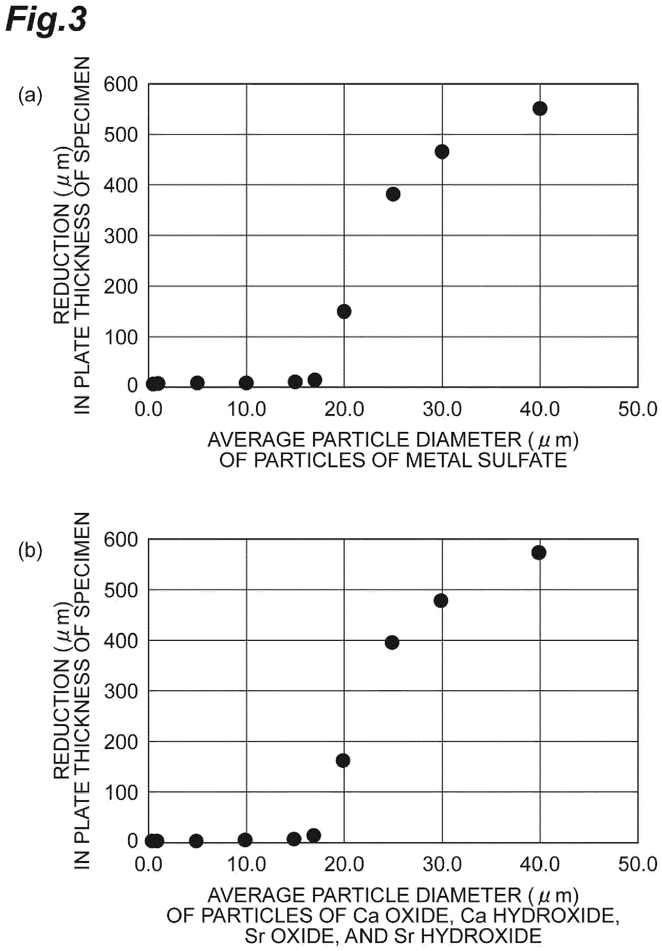

FIG. 3 is a diagram showing the corrosion test results of a coated steel material, FIG 3(a) is a scatter diagram in a case where reductions in the plate thickness of specimens in Examples and Comparative Examples 1 to 10 are taken on the longitudinal axis, and average particle diameters of particles of a metal sulfate are taken on the horizontal axis, and FIG. 3(b) is a scatter diagram in a case where reductions in the plate thickness of specimens in Examples and Comparative Examples 11 to 20 are taken on the longitudinal axis, and average particle diameters of average particle diameters of particles of a calcium compound and a strontium compound are taken on the horizontal axis

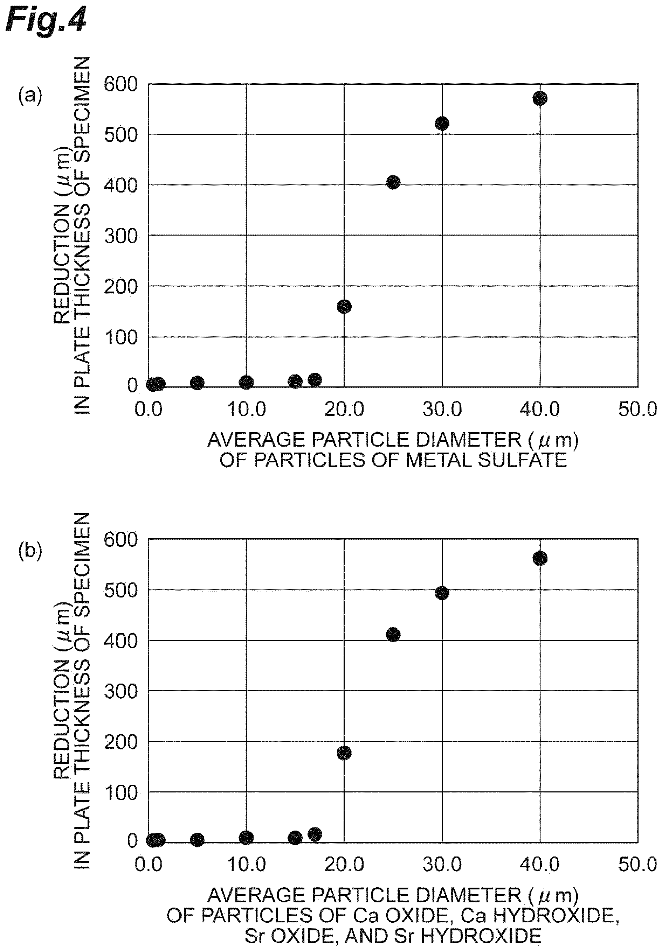

FIG. 4 is a diagram showing the corrosion test results of a coated steel material, FIG. 4(a) is a scatter diagram in a case where reductions in the plate thickness of specimens in Examples and Comparative Examples 21 to 30 are taken on the longitudinal axis, and average particle diameters of particles of a metal sulfate are taken on the horizontal axis, and FIG 4(b) is a scatter diagram in a case where reductions in the plate thickness of specimens in Examples and Comparative Examples 31 to 40 are taken on the longitudinal axis, and average particle diameters of particles of a calcium compound and a strontium compound are taken on the horizontal axis

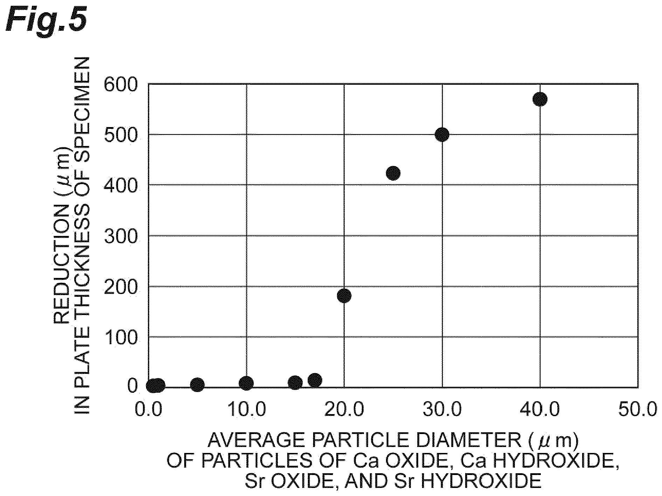

FIG 5 is a diagram showing the corrosion test results of a coated steel material, and is a scatter diagram in a case where reductions in the plate thickness of specimens in Examples and Comparative Examples 41 to 50 are taken on the longitudinal axis, and average particle diameters of particles of a calcium compound and a strontium compound are taken on the horizontal axis

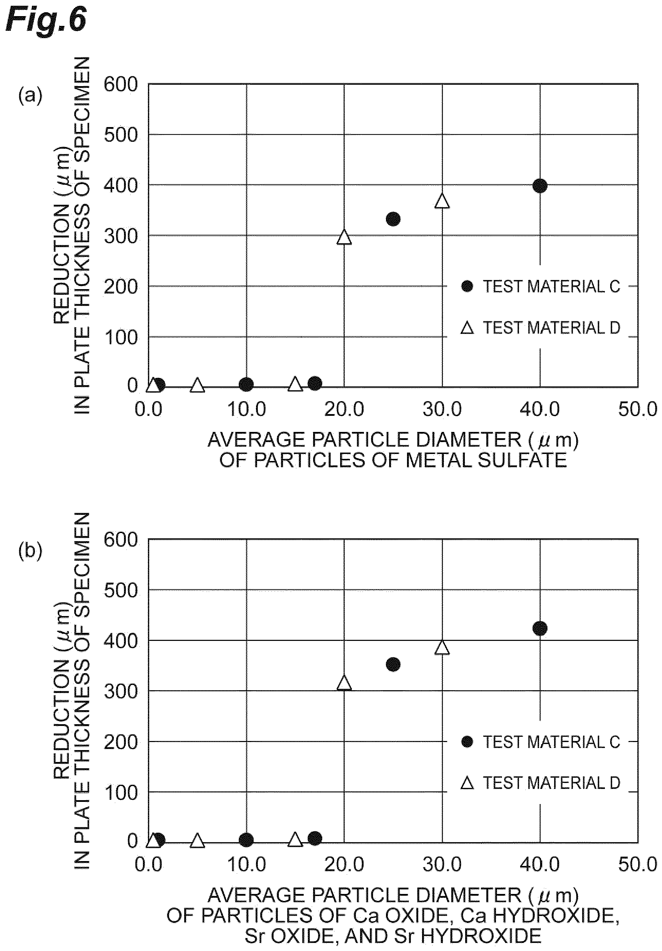

FIG 6 is a diagram showing the corrosion test results of a coated steel material, FIG. 6(a) is a scatter diagram in a case where reductions in the plate thickness of specimens in Examples and Comparative Examples 51 to 60 are taken on the longitudinal axis, and average particle diameters of particles of a metal sulfate are taken on the horizontal axis, and FIG. 6(b) is a scatter diagram in a case where reductions in the plate thickness of specimens in Examples and Comparative Examples 61 to 70 are taken on the longitudinal axis, and average particle diameters of particles of a calcium compound and a strontium compound are taken on the horizontal axis

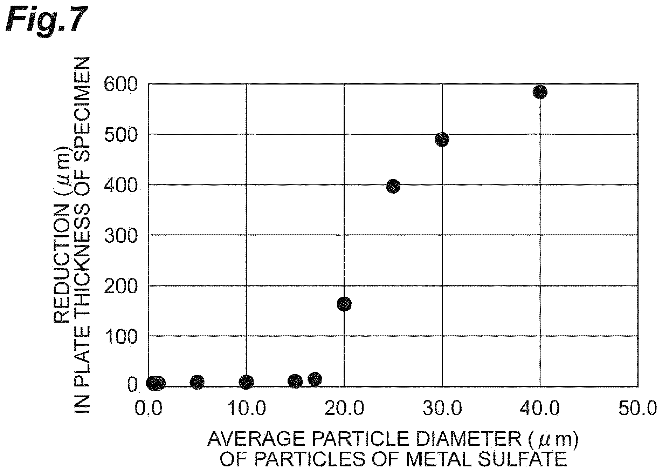

FIG. 7 is a diagram showing the corrosion test results of a coated steel material, and is a scatter diagram in a case where reductions in the plate thickness of specimens in Examples and Comparative Examples 71 to 80 are taken on the longitudinal axis, and average particle diameters of particles of a metal sulfate are taken on the horizontal axis

### Description of Embodiments

Hereinafter, preferred embodiments of the present invention will be described.

### [Coating Material]

The coating material according to the present embodiment includes particles of at least one compound selected from the group consisting of calcium oxide, calcium hydroxide, strontium oxide, and strontium hydroxide, and particles of a metal sulfate

If the steel material is placed in a corrosive environment, a compound layer of an oxide referred to as so-called rust, and the like is produced by a corrosion reaction on the surface. If the compound layer is stable, dense, and anti-corrosive, the corrosion resistance of the steel material is secured, but if there is a high possibility that the compound layer causes a phase change, a density of the compound layer is low due to inclusion of a void and the like, and thus, penetration of water, oxygen, various corrosive substances, and the like present in an external corrosive environment onto the surface of an underlying metal cannot be sufficiently suppressed.

With regard to a steel material having a coating film formed thereon (coated steel material) by applying the coating material according to the present embodiment, in an initial stage where the coated steel material is exposed to a corrosive environment, ions of metals such as iron and the like from the steel material, and a calcium ion, a strontium ion, a sulfate ion, a metal ion, and the like are supplied from the coating film, by means of water, oxygen, and various corrosive substances supplied by penetration through the coating film from the environment, so as to form an anti-corrosion compound layer including a composite oxide of a metal such as iron, calcium, strontium, and the like, and a sulfate of a metal such as calcium, strontium, and the like between the steel material and the coating film or within the coating film.

An anti-corrosion compound layer obtained with the coating material of the present embodiment is dense and has high stability. The anti-corrosion compound layer thus produced can suppress excessive penetration of water, oxygen, and various corrosive substances present in the external corrosive environment into the steel material (barrier effect). The steel material having the anti-corrosion compound layer formed thereon (corrosion-resistant steel structure) has excellent corrosion resistance in not only an ordinary corrosive environment but also an acidic environment or a severe corrosive environment including chlorides. Therefore, the coating material according to the present embodiment can also be said to be a coating material for forming an anti-corrosion compound layer.

Moreover, the coating material according to the present embodiment can also be used after being mixed with a common coating material different from the coating material according to the present embodiment, for example, an epoxy resin coating material or the like. An effect obtained by using the coating material according to the present embodiment is necessarily exerted and cannot be impeded even in a case of mixing the coating material according to the present embodiment with a common coating material different from the coating material. In addition, an efficacy exerted by the components in the coating material according to the present embodiment cannot be impeded even in a case where the components and the other common coating material are mixed.

Hereinafter, the respective components included in the coating material according to the present embodiment will be described, and further, the behaviors of the respective components in the coating film when the coating material is applied onto the steel material and exposed to a corrosive atmosphere, and effects associated therewith will be described in detail.

### (Particles of at Least One Compound Selected from Group Consisting of Calcium Oxide, Calcium Hydroxide, Strontium Oxide, and Strontium Hydroxide)

Calcium oxide and calcium hydroxide (hereinafter sometimes referred to as a calcium compound) react with water in a corrosive environment to supply calcium ions. In addition, strontium oxide and strontium hydroxide (hereinafter sometimes referred to as a strontium compound) react with water in a corrosive environment to supply strontium ions.

The calcium ions and the strontium ions can remarkably enhance the anti-corrosion property of an iron rust layer underlying the anti-corrosion compound layer. That is, when the iron rust layer is formed from iron ions, the calcium ions and the strontium ions aggregate octahedral or tetrahedral units formed from Fe-O-H that forms the iron rust, and make the crystals of the anti-corrosion compound layer finer, leading to extreme densification.

The calcium ions and the strontium ions further react with sulfate ions generated by dissociation of metal sulfate to produce calcium sulfate and strontium sulfate which are sparingly soluble in water, respectively. The calcium sulfate and the strontium sulfate fill voids of the anti-corrosion compound layer formed at an interface between the coating film and the steel material, by a corrosion reaction accompanied by production of calcium sulfate and the strontium sulfate, respectively, to densify the anti-corrosion compound layer. By densifying the anti-corrosion compound layer as such, it is possible to suppress the penetration of substances which promote the corrosion of steel, such as water, oxygen, salts, sulfurous acid gas, and the like from the external environment, into the anti-corrosion compound layer.

In the present embodiment, the average particle diameter of the particles of at least one compound selected from the group consisting of calcium oxide, calcium hydroxide, strontium oxide, and strontium hydroxide is 17 µm or less. By setting the average particle diameter of the particles of the calcium compound or the strontium compound to 17 µm or less, the calcium ions or the strontium ions are supplied at a sufficient rate with respect to a production rate of rust, and thus, the above-mentioned effect by the calcium ions or the strontium ions effect can be easily obtained. From the same viewpoint, the average particle diameter is preferably 15 µm or less, and more preferably 10 µm or less.

The coating material may include only particles of any one compound selected from the group of calcium oxide, calcium hydroxide, strontium oxide, and strontium hydroxide or may also include particles of a plurality of compounds selected from the group, as the particles of any one compound selected from the above group.

In the present specification, the "average particle diameter" of the particles is an average particle diameter measured as follows unless particularly otherwise defined. First, a coating material including the respective particles is applied onto a polished steel plate to obtain a dry coating film in 100 µm or more, and then dried. A cross-section of the coating film after the drying is observed by SEM (Scanning Electron Microscopy)-EDS (Energy Dispersive X-ray Spectroscopy). Based on the elemental analysis (compositional analysis) results of EDS, the particles observed in the image are classified into particles to be measured and particles not to be measured. Subsequently, a total of 200 fixed-direction maximum diameters for the particles to be measured are obtained and an arithmetic average thereof is defined as an average particle diameter.

Incidentally, the "particles of at least one compound selected from the group consisting of calcium oxide, calcium hydroxide, strontium oxide, and strontium hydroxide" may be either particles composed of a single compound of the four compounds or particles composed of a plurality of compounds of the four compounds. Accordingly, if two or more areas of the four compositions are in contact with each other in the image, these areas are recognized as a single particle collectively. In addition, if areas of one compound of the four compounds are in contact with each other, these areas are between the one of the compounds of the four compounds recognize are also added together as a single particle collectively.

In the present embodiment, a total content of the particles of at least one compound selected from the group consisting of calcium oxide, calcium hydroxide, strontium oxide, and strontium hydroxide is 0.10 to 50.0% by mass with respect to the total solid content of the coating material. By setting the content of the particles of the compound in the coating material to 0.10% by mass or more, the above-mentioned effect is easily exerted. Further, by setting the content of the particles of the compound in the coating material to 50.0% by mass or less, an excessive increase in the initial corrosion is suppressed, and thus, the above-mentioned effect is easily exerted while a release of the steel material from the coating film can be suppressed. From the same viewpoint, the content is preferably 1.0 to 45.0% by mass, and more preferably 10.0 to 45.0% by mass.

### (Particles of Metal Sulfate)

The metal sulfate included in the coating material according to the present embodiment is water-soluble and the soluble amount of the metal sulfate in 100 g of water is 0.5 g or more at 5°C. Therefore, in a typical atmospheric corrosive environment, even in the winter season when the temperature is low, dissociation of the metal sulfate can occur when moisture is supplied by rainfall or condensation. That is, the metal sulfate is dissociated into a metal ion and a sulfate ion at predetermined concentrations when water is supplied. The dissociated sulfate ion accelerates the dissolution of iron in the steel material at an initial stage of exposure to a corrosive environment, contributes to early formation of an anti-corrosion compound layer, and also enhances the thermodynamic stability of iron oxide thus produced, whereby it is possible to suppress the iron oxide from acting as an oxidizing agent when further exposed to a corrosive environment after the formation of the anti-corrosion compound layer. In addition, the sulfate ion reacts with a calcium ion dissociated from the calcium compound or a strontium ion dissociated from the strontium compound as described above to produce a sulfate of calcium or strontium which is sparingly soluble in water. Calcium sulfate or strontium sulfate thus produced fills voids of the anti-corrosion compound layer to densify the layer, whereby it is possible to improve the anti-corrosion property of the anti-corrosion compound layer.

In addition, the dissociated metal ion is adsorbed onto the anti-corrosion compound layer while forming a complex ion with a coexisting anion to give ion-selective permeability to the anti-corrosion compound layer, thereby providing an effect of suppressing the permeation of the corrosive anion into the steel material, and also produces an oxide of the metal ion, thereby providing an effect of enhancing an environmental barrier effect of the anti-corrosion compound layer. In addition, the dissociated sulfate ion forms a sulfate with the calcium ion supplied from the calcium compound or the strontium ion supplied from the strontium compound, thereby providing the anti-corrosion effect as described above.

Examples of the metal sulfates include magnesium sulfate, aluminum sulfate, nickel sulfate, iron sulfate, cobalt sulfate, copper sulfate, zinc sulfate, tin sulfate, chromium sulfate, and the like. The metal sulfate is preferably at least one compound selected from the group consisting of aluminum sulfate, nickel sulfate, and magnesium sulfate.

The metal sulfate is present as particles and an average particle diameter thereof is 17 µm or less. By setting the average particle diameter of the particles of the metal sulfate to 17 µm or less, sulfate ions and metal ions are supplied at a sufficient rate with respect to a production rate of rust, and the above-mentioned effect described above by the sulfate ions and the metal ions can be easily obtained. From the same viewpoint, the average particle diameter is preferably 15 µm or less, and more preferably 10 µm or less.

A definition of the average particle diameter of the particles of the metal sulfate is also the same as described above. In a case where the coating material contains particles of a plurality of metal sulfates having the above characteristics, the metal sulfates to be measured are in plural.

In addition, the average particle diameter of the particles of at least one compound selected from the group consisting of calcium oxide, calcium hydroxide, strontium oxide, and strontium hydroxide is 17 µm or less, and by setting the average particle diameter of the particles of the metal sulfate to 17 µm or less, it is possible to take a balance in the production rates of the calcium ions, the strontium ions, the sulfate ions, and the metal ions from each other, thereby making it difficult to form an electrochemical local battery having a possibility of forming large defects in the anti-corrosion compound layer, and therefore, the above-mentioned effects attained by all of the calcium ions, the strontium ions, the sulfate ions, and the metal ions can be sufficiently obtained. In a case where the above-mentioned average particle diameter is not 17 µm or less, the number of defects in the anti-corrosion compound layer increases as a result, and the anti-corrosion property in a severe corrosive environment cannot be secured.

A content of the particles of the metal sulfate is, for example, 0.05 to 30.0% by mass with respect to the total solid content of the coating material. By setting the content to 0.05% by mass or more, the above-mentioned effect attained by the metal sulfate can be easily obtained. By setting the content to 30.0% by mass or less, it is possible to suppress the coating film from being fragile and thus from being released before obtaining the effects of the present invention. From the same viewpoint, the content is preferably 1.5 to of 25.0% by mass, and more preferably 3.0 to 22.0% by mass. Further, a ratio of the content of the particles of the metal sulfate to the total content of the particles of the calcium compound and the strontium compound (Content of metal sulfate/Content of calcium compound and strontium compound) is, for example, 0.1 to 300.0, preferably 0.3 to 15.0, and more preferably 0.5 to 5.0.

### (Phosphoric Acid)

The coating material according to the present embodiment may further include phosphoric acid. The phosphoric acid has an effect of improving the adhesiveness between the coating film and the steel material. Further, the phosphoric acid in the coating film is dissociated into a hydrogen ion and a phosphate ion when being in contact with moisture. In a process in which the calcium compound or the strontium compound makes iron oxide finer, it is possible to produce iron phosphate by a reaction of phosphoric acid with an iron ion eluted from the steel material to further densify the anti-corrosion compound layer. In addition, the dissociated phosphate ion reacts with the calcium ion or the strontium ion to produce calcium phosphate or strontium phosphate which is sparingly soluble in water, and thus, it is possible to improve the environmental barrier property of the anti-corrosion compound layer.

The content of phosphoric acid can be, for example, 10.0% by mass or less with respect to the total solid content of the coating material. By setting the content to 10.0% by mass or less, the densification of the anti-corrosion compound layer with the calcium compound or the strontium compound becomes predominant over the production of iron phosphate of the anti-corrosion compound layer, and thus, it is possible to suppress the corrosion of the steel material upon initial exposure to a corrosive environment from being accelerated unnecessarily. The content is preferably 0.3 to 10.0% by mass, more preferably 0.6 to 10.0% by mass, and still more preferably 1.0 to 10.0% by mass.

### (Metal Powder)

The coating material according to the present embodiment may further include at least one metal powder selected from the group consisting of aluminum powder, zinc powder, and alloy powder containing aluminum and zinc. The constituent elements of the metal powder may be the same as the constituent elements of the plated metal used for the plating of the steel material. By incorporating the metal powder into the coating material, it is possible for the metal powder in the coating film to assist the sacrificial anti-corrosion action of a plated metal in a plated steel material or the like in which the plated metal is already worn due to corrosion or the like.

Furthermore, the metal powder in the coating film is ionized by a corrosion reaction to supply a metal ion. Incidentally, the supplied metal ion is oxidized with a calcium ion, a strontium ion, and an iron ion to form an anti-corrosion composite oxide, which contributes to the formation of an anti-corrosion compound layer.

The content of the metal powder can be, for example, 80.0% by mass or less with respect to the total solid content of the coating material. By setting the content to 80.0% by mass or less, it is possible to suppress the occurrence of a release of the coating film from the steel material at an early stage before the formation of the anti-corrosion compound layer. In addition, if the coating film design that can avoid the release of the coating film is separately realized, the content of the metal powder may be more than 80.0% by mass. In order to efficiently exert the effect of the metal powder, it is possible to set a lower limit of the content in a case where the metal powder is contained to 5% by mass.

### (Coupling Agent)

The coating material according to the present embodiment may further include a coupling agent. By incorporating the coupling agent into the coating material, it is possible to improve the adhesiveness between the compound particles constituting the anti-corrosion compound layer, and thus, further improve the corrosion resistance of the steel material. Examples of the coupling agent include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, N-2-(aminoethyl)-3-aminopropylmethyldimethoxysilane, N-2-(aminoethyl)-3-aminopropyltrimethoxysilane, 3-aininopropyltrimethoxysilane, 3-aminopropyltriethoxysilane, 3-triethoxysilyl-N-(1,3-dimethyl-butylidene)propylamine, N-phenyl- 3-aminopropyltrimethoxysilane, N-(vinylbenzyl)-2-aminoethyl-3-aminopropyltrimethoxysilane hydrochloride, 3-isocyanatepropyltriethoxysilane, 3-mercaptopropyltrimethoxysilane, β-(3,4-epoxycyclohexyl)ethyltrimethoxysilane, vinyltrimethoxysilane, vinyltriethoxysilane, γ-methacryloxytrimethoxysilane, isopropyltitanate, tetra-octyl-bis(didodecyl)phosphite titanate, isopropyl trioctanoyl titanate, isopropyl tridodecylbenzenesulfonyl titanate, an aluminum-based coupling agent, a zirconium-based coupling agent, and the like.

A content of the coupling agent can be, for example, 10.0% by mass or less with respect to the total solid content of the coating material. By setting the content to 10.0% by mass or less, there is a tendency that an effect of improving the adhesiveness can be obtained according to an increase in the content without saturation with respect to the increase in the content. Incidentally, if the coating film design that can avoid the saturation of the effect of improving the adhesiveness is separately realized, the content of the coupling agent may be more than 10.0% by mass. In order to efficiently exert the effect of the coupling agent, it is possible to set a lower limit of the content in a case where the coupling agent is contained to 0.1% by mass.

### (Cellulose Nanofibers)

The coating material according to the present embodiment may further include cellulose nanofibers. By incorporating the cellulose nanofibers into the coating material, it is possible to make the crystal particles constituting the anti-corrosion compound layer finer to enhance cohesiveness, and further improve the corrosion resistance of a steel material.

A content of the cellulose nanofibers can be, for example, 5.0% by mass or less with respect to the total solid content of the coating material. By setting the content to 5.0% by mass or less, there is a tendency that the effect of improving the cohesiveness can be obtained according to an increase in the content without saturation with respect to the increase in the content. Further, by setting the content to 5.0% by mass or less, there is a tendency that it is possible to suppress an extreme increase in the viscosity of the coating material and thus, prevent a decrease in a coating efficiency. Incidentally, if the coating film design that can avoid the saturation of the effect of improving the cohesiveness is separately realized, the content of the cellulose nanofibers may be more than 5.0% by mass. In order to efficiently exert the effect of the cellulose nanofibers, it is possible to set a lower limit of the content in a case where the cellulose nanofibers are contained to 0.5% by mass.

### (Resin)

The coating material according to the present embodiment may further include a resin. The resin is not particularly limited and examples thereof include vinyl butyral resins (a polyvinyl butyral resin and the like), epoxy resins, modified epoxy resins, acrylic resins, urethane resins, nitrocellulose resins, vinyl resins (polyvinyl chloride, polyvinyl acetate, polyvinyl alcohol, and the like), phthalic acid resins, melamine resins, fluorine resins, and the like. Such a resin may be either a thermoplastic resin or a thermosetting resin. In a case where the resin is the thermosetting resin, the coating material can further include a curing agent as necessary, and typically, the coating material is cured during or after drying. The weight average molecular weight of the thermosetting resin is not particularly limited, but is approximately 200 to 20,000. Further, the weight average molecular weight of the thermoplastic resin is also not particularly limited, but is approximately 10,000 to 5,000,000. By incorporating the resin into the coating material, the respective components in the coating material are easily retained near a surface of the steel material after the coating material is applied on the surface of the steel material. Accordingly, an action effect attained by the coating material according to the present embodiment can be more easily obtained by suppressing the respective components in the coating material from flowing out to the outside with rainfall, condensation, or the like before the formation of an anti-corrosion compound layer.

The lower limit value of a content of the resin in the coating material may be, for example, 3.0% by mass, 5.0% by mass, 10.0% by mass, or 20% by mass with respect to the total solid content of the coating material. By setting the content of the resin to 3.0% by mass or more, there is a tendency that the respective components in the coating material are easily retained near a surface of the steel material until the anti-corrosion compound layer is formed on the steel material. The upper limit value of the content of the resin in the coating material may be, for example, 95.0% by mass, 90.0% by mass, 70.0% by mass, or 50.0% by mass with respect to the total solid content of the coating material. By setting the content of the resin to 95.0% by mass or less, there is a tendency that an anti-corrosion compound layer is easily formed on the steel material.

### (Other Components)

The coating material according to the present embodiment can include other additives such as a common coloring pigment, an extender pigment, an anti-rust pigment, and a special functional pigment as well as a thixotropy-imparting agent, a dispersant, an antioxidant, and the like, as necessary. The coating material may include the anti-rust pigment in order to control the corrosion resistance in a case where the corrosive environment is severe, but a content of the anti-rust pigment can be 30.0% by mass or less, and may be 20.0% by mass or less, or 10.0% by mass or less with respect to the total solid content of the coating material in order not to impart excessive corrosion resistance to a corrosion-resistant steel structure. In the present embodiment, an average particle diameter of the particulate materials other than the calcium compound, the strontium compound, and the metal sulfate, which are included in the coating material, can be 100 µm or less, and is preferably 30 µm or less.

### (Solvent)

The coating material according to the present embodiment can further include a solvent. Examples of the solvent include non-aqueous solvents, such as aromatic solvents such as xylene, toluene, and the like, alcoholic solvents having 3 or more carbon atoms, such as, isopropyl alcohol, normal butanol, and the like, ester-based solvents such as ethyl acetate and the like, and others; and aqueous solvents such as water, methyl alcohol, ethyl alcohol, and the like. In addition, the resin can be a resin which is soluble in the solvent, or may be either a resin which is soluble in the non-aqueous solvent or a resin which is soluble in the aqueous solvent.

In the present specification, a viscosity of the coating material is measured by a Brookfield viscometer at 20°C. The viscosity of the coating material is suitably selected depending on an application method, but can be, for example, 200 to 1,000 cps. A content of the solvent in the coating material can be adjusted so that the viscosity of the coating material falls within the above range.

### [Coated Steel Material and Corrosion-Resistant Steel Structure]

FIG. 1 is a cross-sectional view illustrating a coated steel material according to an embodiment of the present invention and a corrosion-resistant steel structure obtained therefrom, FIG. 1(a) illustrates a steel material 10, FIG. 1(b) illustrates a coated steel material 100 including the steel material 10 and a coating film 20 arranged on a surface of the steel material 10, and FIG. 1(c) illustrates a corrosion-resistant steel structure 200 having an anti-corrosion compound layer 30 formed between the steel material 10 and the coating film 20.

The type of a steel of the steel material 10 illustrated in FIG. 1(a) is not particularly limited and may be a common steel material, a low-alloy steel material, a high-alloy steel material such as stainless steel and the like, or a special steel material. The steel material may not have a rust layer, or an organic layer or inorganic layer on the surface, and may have a rust layer, or an organic layer or inorganic layer on the surface.

Incidentally, a surface of the steel material 10 may be polished with shot blasting, an electric tool, or the like before application, and in a case where a rust layer is formed on the surface, rust which can easily removed with a wire brush or the like may be removed. In addition, in a case where the steel material has a rust layer, or an organic layer or inorganic layer on the surface, the layer need not be released, and a coating film may be provided on a surface of the steel material including the layer.

The coated steel material 100 including the coating film 20 in FIG. 1(b) can be obtained by applying the coating material onto a surface of the steel material 10 prepared in (a), and drying the coating material, as necessary. Accordingly, the composition of the coating film 20 can be the same as the composition of the solid content in the coating material. Further, the average particle diameter of the particulate materials in the coating film 20 can be the same as the average particle diameter in the coating material. That is, the coating film 20 includes particles of at least one compound selected from the group consisting of calcium oxide, calcium hydroxide, strontium oxide, and strontium hydroxide, and particles of a metal sulfate. In the coating film 20, the soluble amount of the metal sulfate in 100 g of water is 0.5 g or more at 5°C. In addition, the average particle diameter of the particles of at least one compound selected from the group consisting of calcium oxide, calcium hydroxide, strontium oxide, and strontium hydroxide is 17 µm or less, and the average particle diameter of the particles of the metal sulfate is 17 µm or less. A content of the particles of the compound is 0.10 to 50.0% by mass with respect to the total amount of the coating film, and a content of the particles of the metal sulfate is 0.05 to 30.0% by mass with respect to the total amount of the coating film.

Examples of a method for applying the coating material include air spraying, air-less spraying, brush application, roller application, and the like. Further, the drying of the coating material is performed, for example, by natural drying in the air at normal temperature (25°C) and under normal pressure (1 atm), or the like. The drying time varies depending on a drying mode, but is typically from 30 minutes to 6 hours and selected to an extent to attain practical coating film strength. By the application method, the coating material can be applied onto any of places. In addition, since the coating film can be obtained by a single applying operation, the application method is excellent also in economic efficiency. Furthermore, since the application can be performed at a site where the coated steel material is installed, the application method is available to the application even after processing such as cutting, welding, and the like of the steel material on site. The coating film 20 can also be formed by applying the coating material once or may also be formed by applying the coating material a plurality of times. In a case where the coating film 20 is formed by repeatedly applying the coating material a plurality of times, the compositions of the coating materials may be the same as or different from each other.

A thickness of the coating film 20 can be 1 to 1,000 µm. By setting the thickness of the coating film 20 to 1 µm or more, the respective components in the coating material are sufficiently retained on the steel material, whereby when the coated steel material is exposed to a corrosive environment, there is a tendency that only the corrosion of the steel material does not precede the formation of the anti-corrosion compound layer 30 excessively. Accordingly, a sufficient barrier effect can be easily obtained with respect to the steel material by the anti-corrosion compound layer 30. In particular, even in an environment with air-borne sea-salt particles, there is a tendency that the excessive corrosion due to penetration of the chloride ion is prevented, and thus, the anti-corrosion compound layer 30 can be formed. Further, by setting the thickness of the coating film to 1,000 µm or less, it is not only economically advantageous, but also the coating film 20 can be suppressed from being cracked or released from a surface of the steel material in a case where a bending moment is generated in the coating film due to a stress generated in the underlying steel material by some influence, or other cases. The lower limit value of the thickness of the coating film 20 may be 3 µm, 5 µm, or 10 µm. The upper limit value of the thickness of the coating film 20 may be 750 µm or 500 µm.

The coating film 20 preferably has a moisture permeability of 300 g/(m²·24 h) or less at a dry film thickness of 100 µm, and more preferably has a moisture permeability of 200 g/(m²·24 h) or less at a dry film thickness of 100 µm. The moisture permeability indicates an amount of water vapor passing through a unit area of a membrane-like substance in a predetermined time, and is a value obtained by keeping one side of air and the other side of air, both separated by the membrane-like substance as a border line, at a relative humidity of 90% and in a dry state with a moisture absorbent, respectively, and converting the amount of water vapor passing through the border line within 24 hours to one per square meters. By allowing the coating film 20 to have a moisture permeability of 300 g/(m²·24 h) or less, it is possible to suppress the dissociation of calcium oxide, calcium hydroxide, strontium oxide, strontium hydroxide, metal sulfate, and the like in a corrosive environment from being accelerated, and thus, suppress them from flowing out to the outside. As a result, calcium oxide, calcium hydroxide, strontium oxide, strontium hydroxide, and the metal sulfate in the coating film 20 are easily effectively provided to form the anti-corrosion compound layer 30.

In the present embodiment, since the particles of calcium oxide, calcium hydroxide, strontium oxide, strontium hydroxide, and the metal sulfate have a small average particle diameter of 17 µm or less, they are easily dissociated in a corrosive environment, which can contribute to early formation of an anti-corrosion compound layer. On the other hand, since the dissociation relatively easily occurs in a corrosive environment, it is preferable that the moisture permeability of the coating film 20 is low from the viewpoint that the amount of moisture to be supplied at an initial stage of exposure to a corrosive environment is not excessive. Since any of the compounds of calcium oxide, calcium hydroxide, strontium oxide, strontium hydroxide, a metal sulfate, and the like contained in the coating film 20 are water-soluble, their presence may increase the moisture permeability of the coating film 20. Further, in the coating step in practice, it is considered that defects such as fine cracks and the like in the coating film 20 occur, and such defects may sometimes increase the moisture permeability of the coating film 20. However, by appropriately designing the type and the amount of a resin and the like, it is possible to lower the moisture permeability of the coating film 20.

Furthermore, the moisture permeability of the coating film 20 is too low, reactions (dissociation and the like) of calcium oxide, calcium hydroxide, strontium oxide, strontium hydroxide, and the metal sulfate become slow, but there is no problem in themselves from the viewpoint of securing corrosion resistance in a severe corrosive environment. This is because if the moisture permeability of the coating film is not zero, water and the like infiltrate even slightly, and thus, formation of the anticorrosive compound layer, accompanied by corrosion, proceeds. Therefore, even when the moisture permeability of the coating film 20 is low, it is possible to obtain the effect of the present invention as long as the moisture permeability is not zero.

Moreover, after the coating film 20 is formed, one or two or more layers of a topcoating film may be further formed on a surface of the coating film 20. That is, the coated steel material 100 may further include a topcoating film provided on the coating film 20. The topcoating film preferably includes at least one layer of (A) to (C) below, more preferably includes any two or more layers of (A) to (C) below, still more preferably includes the layer of (B) below and the layer of (C) of below, and particularly preferably includes all of the layers of (A) to (C) below. In the present specification, in a case where the topcoating film includes two or more layers, the layers may sometimes be referred to as a first topcoating film, a second topcoating film, a third topcoating film, and the like, in order from the side closer to the coating film. The order of arrangement of the layers of (A) to (C) below in the topcoating film is not particularly limited, but in a case where the topcoating film is formed of two or more layers including the layer of (A) below, the layer of (A) below is preferably a layer which is the farthest from the coating film 20 (a layer constituting the outermost surface of the topcoating film). In this case, a layer (for example, the first topcoating film) which is closer to the coating film 20 can be the layer of (B) below or the layer of (C) below. The topcoating film may further include another layer other than (A) to (C) below within a range not interfering with the effects that can be obtained in the present embodiment. In addition, the topcoating film may or may not be in direct contact with the coating film 20.
(A) A layer which has a moisture permeability of 300 g/(m²·24 h) or less at a dry film thickness of 100 µm.
(B) A layer which contains at least one compound selected from the group consisting of barium oxide, barium hydroxide, calcium oxide, calcium hydroxide, strontium oxide, and strontium hydroxide; and does not contain a metal sulfate whose soluble amount in 100 g of water is 0.5 g or more at 5°C or contains the metal sulfate so that a ratio of the total mass of the metal sulfate to the total mass of the compound is 5.0% by mass or less.
(C) A layer which contains a metal sulfate whose soluble amount in 100 g of water is 0.5 g or more at 5°C; and does not contain at least one compound selected from the group consisting of barium oxide, barium hydroxide, calcium oxide, calcium hydroxide, strontium oxide, and strontium hydroxide or contains the compound so that a ratio of the total mass of the compound to the total mass of the metal sulfate is 5.0% by mass or less.

Hereinafter, the layers of (A) to (C) will be described in order. The layer of (A) is a layer which has a moisture permeability of 300 g/(m²·24 h) or less at a dry film thickness of 100 µm. The layer of (A) preferably has a moisture permeability of 200 g/(m²·24 h) or less at a dry film thickness of 100 µm. The moisture permeability indicates an amount of water vapor passing through a unit area of a membrane-like substance in a predetermined time, and is a value obtained by keeping one side of air and the other side of air, both separated by the membrane-like substance as a border line, at a relative humidity of 90% and in a dry state with a moisture absorbent, respectively, and converting the amount of water vapor passing through the border line within 24 hours to one per square meters. It is possible to provide design properties to a steel material and the like by forming a topcoating film such as the layer of (A), while it is possible to assist an anti-corrosion effect by an anti-corrosion compound layer to further improve the corrosion resistance of the steel material. In addition, the moisture permeability of the layer of (A) may be a moisture permeability of 20 g/(m²·24 h) or more at a dry film thickness of 100 µm. By setting the moisture permeability of the layer of (A) to 20 g/(m²·24 h) or more at a dry film thickness of 100 µm, the moisture required for the formation of the anti-corrosion compound layer is easily early supplied between the steel material 10 and the coating film 20, and thus, an effect of providing corrosion resistance is easily exerted. Thus, by incorporating the layer of (A) into the topcoating film, it is possible to control the amount of water supplied to the coating film 20 while not depending on the external environment. However, the moisture permeability of the layer of (A) may be less than 20 g/(m²·24 h) at a dry film thickness of 100 µm. If the moisture permeability of the layer of (A) is small, the supply of moisture between the steel material 10 and the coating film 20 is reduced, and thus, it becomes difficult to form the anti-corrosion compound layer early. However, it is also possible to prevent early corrosion, elution, and reduction in the plate thickness due to moisture permeation at the same time. This is because in a case where the corrosion of the steel material 10 is sufficiently prevented by the layer of (A), the anti-corrosion compound layer does not necessarily need to be formed early.

A resin coating material for forming the layer of (A) can be a polyethylene resin, an epoxy resin, a polyvinyl butyral resin, a polyvinyl alcohol resin, a mixture thereof, or the like. The moisture permeability of the layer of (A) can be controlled within a desired range by selecting or mixing the resins for use in the resin coating material. For example, the moisture permeability of the polyethylene resin at a dry film thickness of 100 µm is about 5 to 20 g/(m²·24 h), the moisture permeability of the epoxy resin is about 20 to 40 g/(m²·24 h), the moisture permeability of the polyvinyl butyral resin is about 100 g to 200 g/(m²·24 h), and the moisture permeability of the polyvinyl alcohol resin is about 200 to 400 g/(m²·24 h).

A thickness of the layer of (A) is, for example, 10 to 300 µm, and is preferably 25 to 200 µm, and more preferably 25 to 150 µm. Further, in order to obtain the effect attained by the layer of (A), the thickness of the layer of (A) is preferably 5 µm or more, more preferably 10 µm or more, still more preferably 15 µm or more, and particularly preferably 20 µm or more, and may be 30 µm or more or 50 µm or more. The thickness of the layer of (A) can be, for example, 1 mm or less, 500 µm or less, 300 µm or less, or the like from an economic viewpoint, but it is not particularly limited from the viewpoint of obtaining the effect attained by the layer of (A).

Next, the layer of (B) will be described. The layer (B) is a layer containing at least one compound (oxide or hydroxide) selected from the group consisting of barium oxide, barium hydroxide, calcium oxide, calcium hydroxide, strontium oxide, and strontium hydroxide. The layer of (B) is a layer which does not contain a metal sulfate whose soluble amount in 100 g of water is 0.5 g or more at 5°C or contains the metal sulfate so that a ratio of the total mass of the metal sulfate to the total mass of the compound is 5.0% by mass or less. In a case where the layer of (B) contains the metal sulfate, the ratio of the total mass of the metal sulfate to the total mass of the compound is preferably 1.0% by mass or less, and more preferably 0.1% by mass or less. By forming a topcoating film such as the layer of (B) on the coating film 20, an acid or a chloride ion which is a corrosive substance present in the external corrosive environment and the like and a compound such as barium oxide and the like included in the layer of (B) can react with each other to trap the corrosive substance in the layer of (B). From the viewpoint that the content of the compound such as barium oxide and the like in the layer of (B) is sufficiently large, as compared with the content of the metal sulfate in the layer (B), the compound such as barium oxide and the like does not react with an sulfate ion generated from the metal sulfate, and a function of trapping the corrosive substance from the outside can be sufficiently exerted. Therefore, it is possible to prevent an excessive corrosion reaction of the steel material from proceeding until forming the anti-corrosion compound layer 30 between the steel material 10 and the coating film 20 by reducing an amount of the corrosive substance passing through the topcoating film and reaching the coating film 20. The layer of (B) preferably contains two or more of at least one of barium oxide and barium hydroxide, at least one of calcium oxide and calcium hydroxide, and at least one of strontium oxide and strontium hydroxide.

A total content of barium oxide, barium hydroxide, calcium oxide, calcium hydroxide, strontium oxide, and strontium hydroxide can be, for example, 1.0 to 70.0% by mass with respect to the total mass of the layer of (B). By setting the content to 1.0% by mass or more, the above-mentioned effect attained by the layer of (B) can be easily obtained. Further, by setting the content to 70.0% by mass or less, the adhesiveness of the coating film to the steel material can be easily obtained. From the same viewpoint, the total content is preferably 2.0 to 60.0% by mass, and more preferably 3.0 to 50.0% by mass. In addition, the total content of barium oxide, barium hydroxide, calcium oxide, calcium hydroxide, strontium oxide, and strontium hydroxide in the layer of (B) is preferably larger than the total content of barium oxide, barium hydroxide, calcium oxide, calcium hydroxide, strontium oxide, and strontium hydroxide.

Specific examples of the metal sulfate in the layer of (B) include the same ones as the metal sulfate included in the coating material.

In the same manner to the coating material, the layer of (B) can further contain a resin, phosphoric acid, metal powder, other components, and the like within a range not interfering with the action effect attained by the layer of (B). A content of each of the materials may be the same as the content in the solid content (coating film) of the coating material. Further, the moisture permeability of the layer of (B) is not particularly limited. Accordingly, the layer of (B) may satisfy the requirements of the moisture permeability in the layer of (A). In this case, the layer of (B) may also serve the function of the layer of (A). However, the layer of (B) may not satisfy the requirements of (A). That is, (B) may be a layer which has a moisture permeability of more than 300 g/(m²·24 h) at a dry film thickness of 100 µm.

A thickness of the layer of (B) is, for example, 10 to 200 µm, and is preferably 10 to 100 µm, and more preferably 10 to 50 µm. Further, the thickness of the layer of (B) may be 15 to 30 µm.

Next, the layer of (C) will be described. The layer of (C) is a layer which contains a metal sulfate whose soluble amount in 100 g of water is 0.5 g or more at 5°C. The layer of (C) is also a layer which does not contain at least one compound (oxide or hydroxide) selected from the group consisting of barium oxide, barium hydroxide, calcium oxide, calcium hydroxide, strontium oxide, and strontium hydroxide, or contains the compound so that a ratio of the total mass of the compound to the total mass of the metal sulfate is 5.0% by mass or less. In a case where the layer of (C) contains the compound, a ratio of the total mass of the compound to the total mass of the metal sulfate is preferably 1.0% by mass or less, and more preferably 0.1% by mass or less. By forming a topcoating film such as the layer of (C) on the coating film 20, the metal sulfate is dissolved in water which has infiltrated into the layer of (C) to supply sulfuric acid to the coating film 20. This is because the content of the metal sulfate in the layer of (C) is sufficiently larger than the content of the compound such as barium oxide and the like, and in the layer of (C), a sulfate ion produced by the dissolution of the metal sulfate does not react with cations of barium, calcium, strontium, and the like, and is not trapped with the cations. The supplied sulfuric acid reacts with calcium oxide, calcium hydroxide, strontium oxide, and/or strontium hydroxide, and the like present on the coating film 20 side relative to the layer of (C) and accelerate the dissolution of the steel material, whereby it is possible to make the anti-corrosion compound layer firmer. The layer of (C) can supply a sulfate ion required for formation of the anti-corrosion compound layer even in a case where the coated steel material is placed under a weak corrosive environment. Further, even in a case where the coated steel material is placed under a severe corrosive environment, it is possible to prevent excessive corrosion before the formation of the anti-corrosion compound layer while exerting an effect of making the anti-corrosion compound layer firm by suppressing the excessive supply of the sulfate ion with a combined use with the layer of (A) or the layer of (B). In the layer of (C), the metal sulfate preferably exhibits a pH of 5.5 or less in an aqueous solution thereof at a temperature 5°C and a concentration of 1 mol/L. In addition, the metal sulfate preferably contains at least one selected from the group consisting of aluminum sulfate, iron sulfate (II), iron sulfate (III), copper sulfate, and chromium sulfate (III). By using the compound as the metal sulfate, a firm anti-corrosion compound layer can be more easily obtained.

A total content of the metal sulfate can be, for example, 1.0 to 70.0% by mass with respect to the total mass of the layer of (C). By setting the content to 1.0% by mass or more, the above-mentioned effect attained by the layer of (C) can be easily obtained. Further, by setting the content to 70.0% by mass or less, the adhesiveness of the coating film to the steel material can be easily obtained. From the same viewpoint, the total content is preferably 2.0 to 60.0% by mass, and more preferably 3.0 to 50.0% by mass. The total content of the metal sulfate in the layer of (C) is preferably larger than the total content of the metal sulfate in the coating film.

In the same manner to the coating material, the layer of (C) can further contain a resin, phosphoric acid, metal powder, other components, and the like within a range not interfering with the action effect attained by the layer of (C). A content of each of the materials may be the same as the content in the solid content (coating film) of the coating material. Further, the moisture permeability of the layer of (C) is not particularly limited. Accordingly, the layer of (C) may satisfy the requirements of the moisture permeability in the layer of (A). In this case, the layer of (C) may also serve the function of the layer of (A). However, the layer of (C) may not satisfy the requirements of (A). That is, (C) may be a layer which has a moisture permeability of more than 300 g/(m²·24 h) at a dry film thickness of 100 µm.

A thickness of the layer of (C) is, for example, 10 to 200 µm, and is preferably 10 to 100 µm, and more preferably 10 to 50 µm. Further, the thickness of the layer of (A) may be 15 to 30 µm.

Examples of a method for forming the topcoating film include the same one as the method for applying the coating material when the coating film 20 is formed with a resin coating material for forming a topcoating film.

By providing the coating film 20 on a surface of the steel material or the like, it is possible to provide high corrosion resistance for the steel material or the like in not only an ordinary corrosive environment but also an acidic environment or a severe corrosive environment including chlorides. In addition, by providing the topcoating film on the coating film 20, it is possible to provide design properties for the steel material or the like, and thus assist an anti-corrosion effect by the anti-corrosion compound layer, whereby it is possible to further improve the corrosion resistance of the steel material. Another layer for decoration, anti-corrosion, or the like may be provided between the coating film 20 and the steel material. Further, in a case where the steel material has rust, a surface of the steel material may be polished with shot blasting, an electric tool, or the like before application of the coating material, and rust may be removed with a wire brush or the like. In contrast, it is also possible to apply the coating material while not removing the rust of the steel material. Therefore, for example, with regard to a steel material constituting a bridge that is a real estate, in a case where rust is generated by the use of the steel material, it is possible to provide corrosion resistance for the steel material and achieve a flexible response on site by applying a coating material on the steel material in a state where rust is included, thus to form a coating film. In addition, it can also be said that the topcoating film is a protective film for protecting a steel material and the like, together with the coating film. In this case, the protective film includes the coating film and a topcoating film provided on the coating film.

As illustrated in FIG 1(c), the corrosion-resistant steel structure 200 includes the steel material 10, the coating film 20, and the anti-corrosion compound layer 30 formed between the steel material 10 and the coating film. By exposing the coated steel material 100 illustrated in FIG. 1(b) to a corrosive environment including water, each of the components in the coating film 20 and the metal components such as iron and the like in the steel material 10 can form the anti-corrosion compound layer 30, as accompanied by the above-mentioned action, thereby obtaining the corrosion-resistant steel structure 200.

In order to form the anti-corrosion compound layer 30, a suitable exposure environment for the coated steel material 100 can be a water-containing atmosphere capable of providing moisture to the coated steel material 100, and the exposure may be performed in, for example, an outdoor environment or an indoor environment, an acidic environment such as hydrochloric acid and the like, an environment with air-borne sea-salt particles, an environment with air-borne air pollutants such as SOₓ, NOₓ, and the like, and other environments. In addition, examples of suitable exposure conditions for the coated steel material 100 include exposure to outdoors for approximately 1 to 30 days.

By allowing the corrosion-resistant steel structure 200 to include the anti-corrosion compound layer 30, it is possible to suppress excessive penetration of water, oxygen, and various corrosive substances present in the external corrosive environment into the steel material (barrier effect), and the corrosion-resistant steel structure 200 has excellent corrosion resistance in not only an ordinary corrosive environment but also an acidic environment or a severe corrosive environment including chlorides. After the formation of the anti-corrosion compound layer 30, the coating film 20 may be released.

A thickness of the anti-corrosion compound layer 30 may be approximately 0.5 to 50 µm. If the thickness of the anti-corrosion compound layer 30 is 0.5 µm or more, the corrosion-resistant effect of the steel material can be easily obtained.

This anti-corrosion compound layer exerts its effects in not only an ordinary corrosive environment but also an acidic environment or a severe corrosive environment including chlorides. Further, the acidic environment or the severe corrosive environment including chlorides as mentioned herein is exemplified by a low-pH environment (for example, pH 4.0 or less); an environment (for example, on the ground to which seawater in the vicinity of the sea goes air-borne directly) expected to remarkably accelerate corrosion of a steel material having a chloride which is constantly present on surfaces of various steel materials at a concentration higher than that in a natural atmospheric corrosive environment (typical corrosive environment) or others; and the like.

Furthermore, as illustrated in FIGS. 2(a) to 2(c), a plated steel material 14 may be used instead of the steel material 10. As illustrated in FIG. 2(a), the plated steel material 14 has a plated layer 12 with a metal having an anti-corrosion action, for example, a metal such as aluminum, zinc, an alloy thereof, and the like on a surface of the steel material 10. In a case where the plated steel material 14 is used instead of the steel material 10, the coated steel material 100 includes the plated steel material 14, and the coating film 20 formed on a surface of the plated steel material 14, as illustrated in FIG. 2(b). Examples of the plated steel material 14 include a hot-dip galvanized steel material.

In addition, in a case where the plated steel material 14 is used instead of the steel material 10, the corrosion-resistant steel structure 200 includes the plated steel material 14, the coating film 20, and the anti-corrosion compound layer 30 formed between the plated steel material 14 and the coating film 20 or within the coating film 20, as illustrated in FIG. 2(c). Incidentally, when the coating material is applied onto the steel material 10 as illustrated in FIG. 1, the production of iron ions or iron oxides due to corrosion of some of iron and the like in the steel material 10 contributes to the formation of the anti-corrosion compound layer 30, but when the coating material is applied onto the plated steel material 14 as in FIG. 2, the production of zinc ions and zinc oxides due to corrosion of some of zinc and the like in the plated layer 12 contributes to the formation of the anti-corrosion compound layer 30.

### Examples

Hereinafter, Examples of the present invention will be shown to describe the present invention more specifically, but the present invention is not limited to these Examples while a variety of modifications can be made within a range not departing from the technical spirit of the present invention.

### (Example 1)

### <Preparation of Coating Material>

Raw material particles of calcium oxide, strontium oxide, aluminum sulfate, nickel sulfate, and magnesium sulfate were prepared and subjected to a treatment for decreasing particle diameters by milling/crushing the respective particles in a dry-type jet mill. 3 parts by mass of the calcium oxide particles after the treatment, 3 parts by mass of the strontium oxide particles after the treatment, 2 parts by mass of the aluminum sulfate particles after the treatment, 2 parts by mass of the nickel sulfate particles after the treatment, 2 parts by mass of the magnesium sulfate particles after the treatment, 10 parts by mass of an extender/coloring pigment, and 78 parts by mass of a mixture of an epoxy resin and a polyaminoamide resin (a resin Y shown in Table 3) were dispersed in a bead mill with appropriate amounts of xylene, toluene, and isopropyl alcohol so that a viscosity of the coating material was 200 to 1,000 cps at 20°C, thereby obtaining a coating material of Example 1. Further, the extender/coloring pigment (sometimes referred to as an extender/coloring pigment and the like) is formed of barium sulfate and calcium carbonate as the extender pigment, and red iron oxide, carbon (inorganic pigments), and phthalocyanine blue (organic pigment) as the coloring pigment, respectively, in which both the pigments are included at equivalent parts by mass. The composition of the solid content of the coating material is shown in Table 4.

### <Manufacture of Coated Steel Material>

A specimen (I) shown in Table 1 below, having a dimension of 30 × 25 × 5 mm, was prepared. Table 1 shows the chemical components of a steel material used for a corrosion test and the presence or absence of galvanization. All of the units of the numerical values in Table 1 are % by mass and the chemical components other than those described in Table 1 are iron (Fe). A surface of the specimen (I) was subjected to a pretreatment α shown in Table 2 below and the specimen having a clean surface thus obtained was taken as a specimen (Iα). A test material A in Table 4 means the specimen (Iα).

The obtained coating material was applied onto a surface of the specimen (Iα) after the pretreatment by an air spray method. Then, the test material after the application was dried for 7 days in the air at normal temperature (25°C) according to an ordinary coating film test method to obtain a coated steel material of Example 1. The thickness of the coating film formed from the coating material was 25 µm.

**[Table 1]**

| | | C | Si | Mn | P | S | Al | N | Cr | Ni | Cu |
|---|---|---|---|---|---|---|---|---|---|---|---|
| I | Common steel | 0.11 | 0.15 | 0.31 | 0.005 | 0.003 | - | - | - | - | - |
| II | Hot-dip galvanized steel material | Steel material obtained by subjecting the common steel material (I) to hot-dip galvanization with an average plating thickness of 20 µm | | | | | | | | | |
| III | Common steel | 0.11 | 0.15 | 0.31 | 0.005 | 0.004 | 0.02 | 0.002 | 0.01 | 0.01 | 0.01 |
| IV | Common steel | 0.10 | 0.15 | 0.31 | 0.005 | 0.003 | 0.001 | 0.002 | - | - | - |

**[Table 2]**

| | |
|---|---|
| α | A black scale or a stain on a surface of a specimen is removed by polishing. |
| β | A specimen is exposed to the atmosphere for 3 months in advance to naturally form a rust layer such as an oxide and the like on a surface of the specimen, and the rust layer is simply cleaned with a wire brush. |
| γ | A black scale or a stain on a surface of a specimen is removed by shot blasting. |

### (Examples and Comparative Examples 2 to 110, Examples and Comparative Examples 121 to 150, and Comparative Examples 161 to 170)

A coating material of Examples and Comparative Examples 2 to 110, Examples and Comparative Examples 121 to 150, and Comparative Examples 161 to 166 was obtained in the same manner as in Example 1, except that the composition of the coating material was changed to those described in Tables 4 to 14, Tables 16 to 18, and Table 20. As the coating material of Comparative Examples 161 to 166, a commercially available organic zinc-rich coating material specified in JIS K 5553 was used. Incidentally, the amount of the solvent in the coating material was appropriately adjusted so that the viscosity of the coating material at 20°C as determined using a B-type viscometer was 200 to 1,000 cps. In addition, a coated steel material of Examples and Comparative Examples 2 to 110, Examples and Comparative Examples 121 to 150, and Comparative Examples 161 to 170 was obtained in the same manner as in Example 1, except that the specimen of the steel material, the pretreatment method, and the thickness of the coating film were changed to those described in Tables 4 to 14, Tables 16 to 18, and Table 20. The average particle diameter of the particles was adjusted by grinding the particles in the powder state by a dry type jet mill, dispersing the particles in the coating material with a three-roll mill or a bead mill, and changing the grinding or dispersing time alone or in combination of these methods.

### (Examples 111 to 120 and Examples 151 to 160)

A coating material of Examples 111 to 120 and Examples 151 to 160 was obtained in the same manner as in Example 1, except that the composition of the coating material was changed to those described in Table 15 and Table 19. The amount of a solvent in the coating material was appropriately adjusted so that the viscosity of the coating material at 20°C as determined using a B-type viscometer was 200 to 1,000 cps. In addition, in Examples 111 to 120 and Examples 151 to 160, a steel material of Examples 111 to 120 and Examples 151 to 160 was obtained in the same manner as in Example 1, except that the specimen of the steel material, the pretreatment method, and the thickness of the coating film were changed to those described in Table 15 and Table 19 to form a coating film, and a topcoating film (corresponding to the layer of (A)) provided by further applying a topcoating material onto the coating film so that the thickness and the moisture permeability were as described in Table 15 and Table 19 was formed. The average particle diameter of the particles was adjusted by grinding the particles in the powder state by a dry type jet mill, dispersing the particles in the coating material with a three-roll mill or a bead mill, and changing the grinding or dispersing time alone or in combination of these methods. In addition, the moisture permeability of the topcoating film was adjusted by use of a polyethylene resin, an epoxy resin, a polyvinyl butyral resin, and a polyvinyl alcohol resin alone or in mixture as the topcoating material. A topcoating film having a thickness of 100 µm for measurement of the moisture permeability using the topcoating material as in each of Examples and Comparative Examples was measured, and the moisture permeability of the topcoating film was measured in accordance with a condition B (a temperature of 40°C, a relative humidity of 90%) in JIS Z 0208 (a cup method).

### (Examples 171 to 178)

A coating material and a coated steel material of Examples 171 to 174 were obtained in the same manner as in Example 1, except that a coating film was formed so that the moisture permeability was as described in Table 21. Furthermore, a coating material and a coated steel material of Examples 175 to 178 were obtained in the same manner as in Example 36, except that a coating film was formed so that the moisture permeability was as described in Table 21. The moisture permeability of the coating film was adjusted by use of a mixture formed by appropriate amounts of an epoxy resin, a polyvinyl butyral resin, a urethane resin, a polyethylene resin, and a cellulose diacetate resin in the preparation of the coating material.

The moisture permeability of the coating film was measured by two methods (a method using a cellulose triacetate film and a method using a release paper). The same coating material as the one used in each of Examples was applied onto each of a cellulose triacetate film and a release paper, followed by drying, to form a coating film having a thickness of 100 µm. A coating film for measurement of a moisture permeability was obtained by mechanically releasing the coating film from the release paper. Ten coating films for measurement of a moisture permeability, and then laminates having a coating film and a cellulose triacetate film were obtained from the coating material of each of Examples by the same operation. For the films, the moisture permeability of the coating film was measured in accordance with a condition B in JIS Z 0208 (a cup method). That is, the coating film for measurement of a moisture permeability, the laminate having a coating film and a cellulose triacetate film, and the same cellulose triacetate film as the one used for the manufacture of the laminate were each mounted onto a screw-type cup containing a moisture absorbent. The laminate was arranged so that the cellulose triacetate film faced the moisture absorbent side. The mounted screw-type cup was placed in a constant-temperature and constant-humidity layer at a temperature of 40°C and a relative humidity of 90%, and the mass of the cup after an elapse of 24 hours was measured. From an average value of the mass changes of the coating films for measurement of a moisture permeability, the moisture permeability of the coating film was determined as converted to one per unit area. In addition, the moisture permeability of the coating film was determined by subtracting the mass change of the cellulose triacetate film from the average value of the mass changes of the ten laminates having the coating film and the cellulose triacetate film, and converting the difference to one per unit area. Since the difference in the measured moisture permeability between the method using the cellulose triacetate film and the method using the release paper was hardly recognized, the average value of both the methods was taken as the moisture permeability of the coating film.

### (Examples and Comparative Examples 181 to 186)

A coating material of Examples and Comparative Examples 181 to 186 was obtained in the same manner as in Example 1, except that the composition of the coating material was changed to one as described in Table 22. The amount of a solvent in the coating material was appropriately adjusted so that the viscosity of the coating material at 20°C as determined using a B-type viscometer was 200 to 1,000 cps. In addition, a steel material of Examples and Comparative Examples 181 to 186 was obtained in the same manner as in Example 1, except that the specimen of the steel material, the pretreatment method, and the thickness of the coating film were changed to those described in Table 22 to form a coating film. Adjustment of the average particle diameter of the particles in Comparative Examples 181, 183, and 185 was not particularly strictly performed. That is, the particles of commercially available particles in the powder state were ground in a mortar and then dispersed in a short period of time in a resin with a bead mill to obtain a coating material. On the other hand, the average particle diameter of the particles in Examples 182, 184, and 186 was adjusted by grinding the particles in the powder state by a dry type jet mill, dispersing the particles in the coating material for a longer period of time than that in Comparative Example 181, 183, and 185 with a three-roll mill or a bead mill. The coated steel materials of Examples, and Comparative Examples 181, 182, 183, and 184 were each manufactured with the coating material solid contents, the coating film compositions, and the conditions of the test materials, which were the same as in Test Nos. 41 and 42 of Japanese Unexamined Patent Publication No. 2001-234369, and the coated steel materials of Examples and Comparative Examples 185 and 186 were each manufactured with the coating material solid contents, the coating film compositions, and the conditions of the test materials, which were the same as in Example 91 of International Publication WO 2014/020665.

### (Examples 191 to 200)

A coating material of Examples 191 to 200 was obtained as described in Table 23 in the same manner as in Example 74, and thus, a coating film was formed on a surface of a specimen. The amount of a solvent in the coating material was appropriately adjusted so that the viscosity of the coating material at 20°C as determined using a B-type viscometer was 200 to 1,000 cps. In addition, in Examples 191 to 200, a coated steel material was obtained in the same manner as in Example 74, except that a topcoating film (corresponding to the layer of (B) in Examples 191, 193, 195, 197, and 199 and the layer of (C) in Examples 192, 194, 196, 198, and 200) provided by applying a topcoating material having the composition described in Table 24 onto the coating film so that the thickness and the resin were each as described in Table 23 was formed.

### (Examples 201 to 210)

A coating material of Examples 201 to 210 was obtained as described in Table 25 in the same manner as in Example 88, and thus, a coating film was formed on a surface of a specimen. The amount of a solvent in the coating material was appropriately adjusted so that the viscosity of the coating material at 20°C as determined using a B-type viscometer was 200 to 1,000 cps. In addition, in Examples 201 to 210, a coated steel material was obtained in the same manner as in Example 88, except that a first topcoating film (corresponding to the layer of (B) in Examples 201, 203, 205, 207, and 209 and the layer of (C) in Examples 202, 204, 206, 208, and 210) provided by applying a first topcoating material having the composition described in Table 24 onto the coating film so that the thickness and the resin were as described in Table 25 was formed, and a second topcoating film (corresponding to the layer of (C) in Examples 201, 203, 205, 207, and 209 and the layer of (B) in Examples 202, 204, 206, 208, and 210) provided by applying a second topcoating material having the composition described in Table 25 onto the first topcoating film so that the thickness and the resin were as described in Table 25 was formed.

### (Examples 211 to 214)

A coating material of Examples 211 to 214 was obtained as shown in Table 26 in the same manner as in Example 74, and thus, a coating film was formed on a surface of a specimen. Next, in Examples 211 to 214, a first topcoating film (corresponding to the layer of (B) in Examples 211 and 213 and the layer of (C) in Examples 212 and 214) provided by further applying a first topcoating material having the composition described in Table 24 onto the coating film so that the thickness and the resin were as described in Table 26 was formed. Further, a second topcoating film (corresponding to the layer of (C) in Examples 211 and 213 and the layer of (B) in Examples 212 and 214) provided by further applying a second topcoating material having the composition described in Table 24 onto the first topcoating film so that the thickness and the resin were as described in Table 26 was formed. In addition, in Examples 213 to 214, a third topcoating film (corresponding to the layer of (A)) provided by further applying a third topcoating material onto the second topcoating film so that the thickness and the moisture permeability were as described in Table 26 was formed. Thus, a coated steel material of Examples 211 to 214 was obtained. Further, the moisture permeability of the third topcoating film was adjusted by use of a polyethylene resin, an epoxy resin, a polyvinyl butyral resin, and a polyvinyl alcohol resin alone or in mixture as the topcoating material.

### (Examples 215 and 216)

A coating material of Examples 215 and 216 was obtained in the same manner as in Example 74, except that coating films having a thickness of 60 µm and 120 µm, respectively, were formed.

### (Examples 221 to 224)

A coating material of Examples 221 to 224 was obtained as described in Table 27 in the same manner as in Example 84, and thus, a coating film was formed on a surface of a specimen. Next, in Examples 221 to 224, a first topcoating film (corresponding to the layer of (B) in Examples 221 and 223 and the layer of (C) in Examples 222 and 224) provided by further applying a first topcoating material having the composition described in Table 24 onto the coating film so that the thickness and the resin were as described in Table 27 was formed. Further, in Examples 223 and 224, a second topcoating film (corresponding to the layer of (A)) provided by further applying a second topcoating material onto the first topcoating film so that the thickness and the resin were as described in Table 27 was formed. Thus, coated steel materials for an acid resistance test and a chloride resistance test of Examples 221 to 224 were obtained. Incidentally, the moisture permeability of the second topcoating film was adjusted by use of a polyethylene resin, an epoxy resin, a polyvinyl butyral resin, and a polyvinyl alcohol resin alone or in mixture as the topcoating material.

Furthermore, in the coated steel material of Examples and Comparative Examples 2 to 178 and 191 to 224, test materials B to D were used as the test material, together with the test material A. Further, in the coated steel materials of Examples 181 to 184, a test material E was used, and in the coated steel materials of Examples 185 to 186, the test material F was used, each as the test material. The test materials A to F in Examples and Comparative Examples 2 to 224 will be described as below.

Specimens (I) to (IV) shown in Table 1 above were prepared. A surface of the specimen (II) was subjected to the pretreatment α shown in Table 2 above, and the obtained specimen was taken as a specimen (IIα). A surface of the specimens (I) and (II) was subjected to the pretreatment β shown in Table 2 above, and the obtained specimens were taken as a specimen (Iβ) and a specimen (IIβ). A surface of the specimen (III) was subjected to the pretreatment γ shown in Table 2 above and the obtained specimen was taken as a specimen (IIIγ). A surface of the specimen (IV) was subjected to the pretreatment γ shown in Table 2 above and the obtained specimen was taken as a specimen (IVγ).

The test material A described in the column of Test material in Tables 4 to 23 and 25 to 27 means a specimen (Iα) as described above. The test material B means the specimen (Iβ). The test material C means the specimen (IIα). The test material D means the specimen (IIβ). The test material E means the specimen (IIIγ). The test material F means the specimen (IVγ).

In addition, exposure to the atmosphere in the pretreatment β was performed in a horizontal posture at a location 20 m from the seashore having Obama-bay located in the west in Obama-shi, Fukui-ken, Japan (35° 31' 49.39" N, 135° 45' 4.69" E). An annual average content of air-borne salts in the exposed area was about 0.8 mg NaCl/100 cm²/day, which indicates a corrosive environment being strongly affected by air-borne movement of sea-salts.

The meanings of the symbols in the column of Resin in Tables 4 to 23 and 25 to 27 are as shown in Table 3 below. For example, Examples described as X in the column of Resin indicate that the same mass of a polyvinyl butyral resin was used instead of the mixture of an epoxy resin and a polyaminoamide resin (resin Y) in Example 1. In addition, the average particle diameter of the zinc powder in Tables 4 to 23 and 25 to 27 is 4 µm, and the average particle diameter of the aluminum powder is 6 µm. A silane coupling agent (manufactured by Shin-Etsu Chemical Co., Ltd., trade name: KBM-403) was used as a coupling agent and Cellulose Nanofibers (manufactured by DKS Co. Ltd., trade name: RHEOCRYSTA) were used as the cellulose nanofibers.

**[Table 3]**

| | Resin | |
|---|---|---|
| X | Polyvinyl butyral resin | S-LEC B, manufactured by Sekisui Chemical Co., Ltd., Molecular weight: 25,000 |
| Y | Epoxy resin | Epikote, manufactured by Mitsubishi Chemical Corporation, Epoxy equivalent: 160 to 170 |
| | Polyaminoamide resin | Tohmide, manufactured by Fuji Kasei Co., Ltd., Amine value: 212 |

### <Measurement of Average Particle Diameter>

The average particle diameter of the particles of the calcium compound and the strontium compound, and the average particle diameter of the particles of the metal sulfate were determined by the following method. That is, the coating material obtained in Examples and Comparative Examples was applied onto a polished steel plate so that the dry film thickness was 100 µm or more. A cross-section of the coating film after drying was observed by SEM (Scanning Electron Microscopy)-EDS (Energy Dispersive X-ray Spectroscopy) and subjected to elemental analysis. Based on the results from the elemental analysis by SEM-EDS, particles to be measured and the other particles were distinguished in the image. 200 particles to be measured were arbitrarily selected to measure a maximum unidirectional diameter of each of the particles. An arithmetic mean value of the maximum unidirectional diameter of the 200 particles was defined as an average particle diameter of the particles.

### <Evaluation of Reduction in Thickness of Test Material before and after Corrosion Test>

The coated steel material obtained in Examples and Comparative Examples 1 to 178 and 191 to 224 was placed horizontally on a ceramic-made base and a cyclic corrosion test was performed for 5,760 hours with the following steps (1) to (3) in one cycle.
(1) Exposure for 15.5 hours in an environment of a temperature of 50°C and a relative humidity of 95% (wet step)
(2) Exposure for 8 hours in an environment of a temperature of 60°C and a relative humidity of 50% (dry step)
(3) Natural seawater collected at a location 35° 31' 50" N, 135° 45' 4" E was filtered and then an aqueous solution adjusted to pH 4 with hydrochloric acid was sprayed at 30°C for 0.5 hours so that a liquid film having a thickness 100 µm or more is always present in the spraying step (spraying step)

### <Evaluation of Reduction in Thickness of Test Material before and after Exposure Test>

The coated steel material obtained in Examples and Comparative Examples 181 to 184 was exposed for two years in the seashore area at a location 8 m from the seashore. An annual average content of air-borne salts in the exposed area is 1.22 mg/dm²/day (1.22 mg/100 cm²/day). The exposure test method is the same method as the exposure test in Japanese Unexamined Patent Publication No. 2001-234369.

### <Evaluation of Reduction in Thickness of Test Material before and after Long-Term Exposure Test>

The coated steel material obtained in Examples and Comparative Examples 185 and 186 was placed at a location 20 m from the seashore having Obama-bay located in the west in Obama-shi, Fukui-ken, Japan (35° 31' 49.39" N, 135° 45' 4.69" E) and subjected to an atmospheric exposure test for 10 years. An annual average content of air-borne salts in the exposed area was about 0.8 mg NaCl/100 cm²/day. The long-term exposure test method is the same method as in the exposure test in International Publication WO 2014/020665.

In a case where the specimen (Iα), the specimen (IIIγ), or the specimen (IYγ) was used as a test material, the coating film was removed from the coated steel material after the exposure test using a coating film releasing agent, and then the obtained steel material was immersed in a mixed aqueous solution of diammonium citrate and a trace amount of a corrosion inhibiting solution to perform derusting. By comparing the mass of the steel material after the derusting with the mass of the specimen before the exposure test, a reduction in the thickness of the specimen before and after the exposure test was determined. In addition, the reduction in the thickness was determined with an assumption that the thickness of the steel material was reduced uniformly on the entire surface of the steel material.

In a case where the specimen (Iβ) was used as the test material, another specimen which had been subjected to a pretreatment β was subjected to derusting as described above, and a reduction in the thickness of the steel material was determined in the same manner as in the specimen (Iα), except that the mass of the specimen after the derusting was regarded as the mass of the specimen before the exposure test.

In a case where the specimen (IIα) or the specimen (IIβ) shown in Table 1 above was used as the test material, the thickness of the galvanized layer was measured from observation of the cross-sections of the specimens before and after the exposure test, and the both were compared to determine a reduction in the thickness (plate thickness) of the steel material before and after the exposure test (a reduction in a combined thickness of the galvanized steel material and the common steel material as a base). The evaluation results are shown in Tables 4 to 27.

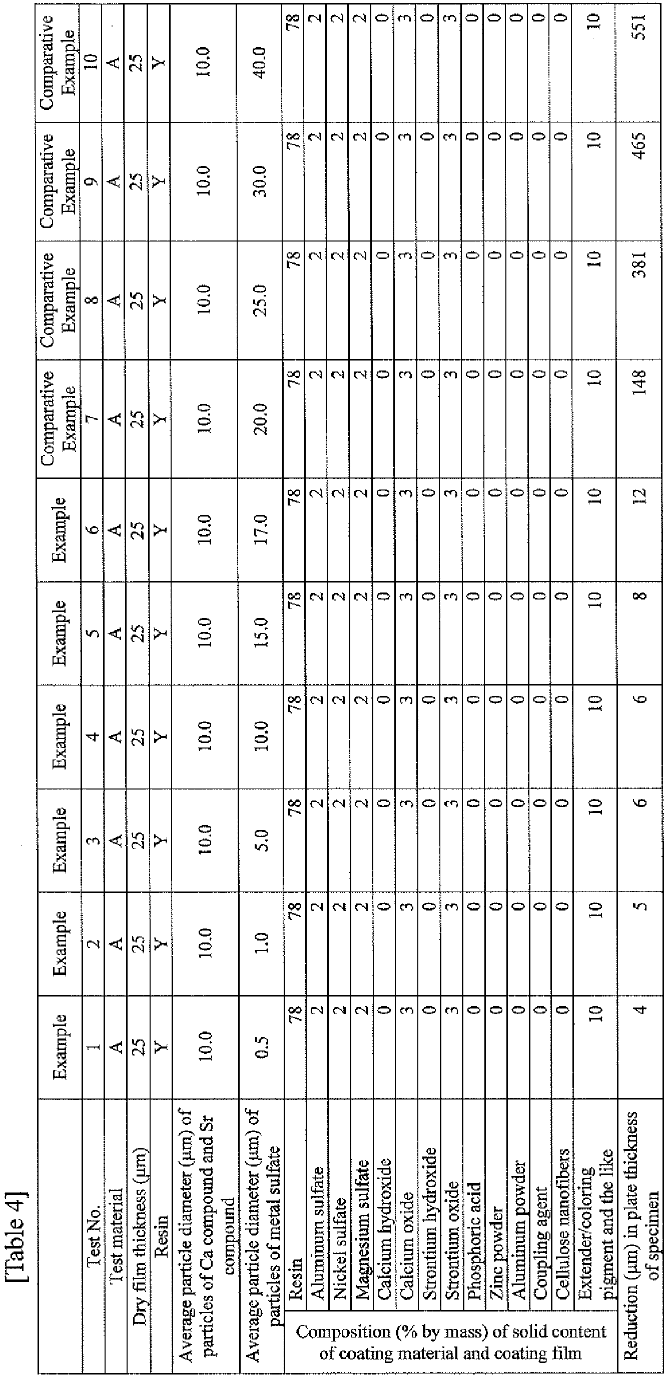

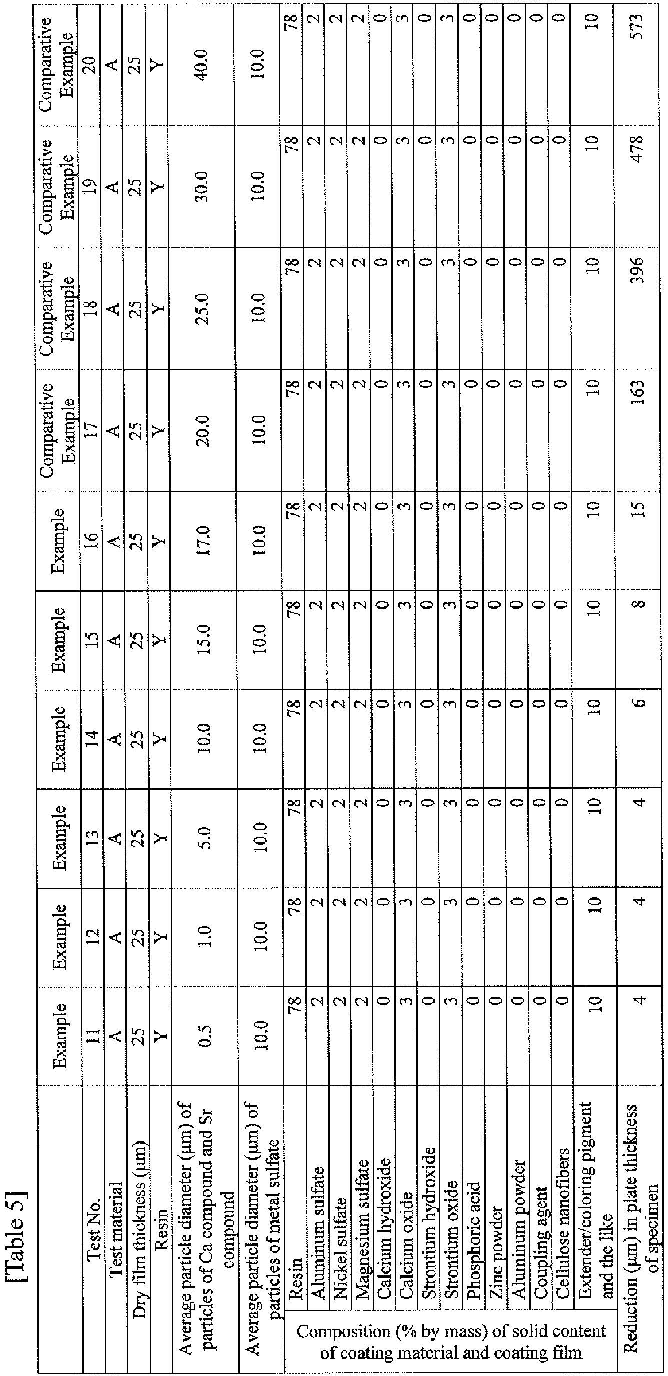

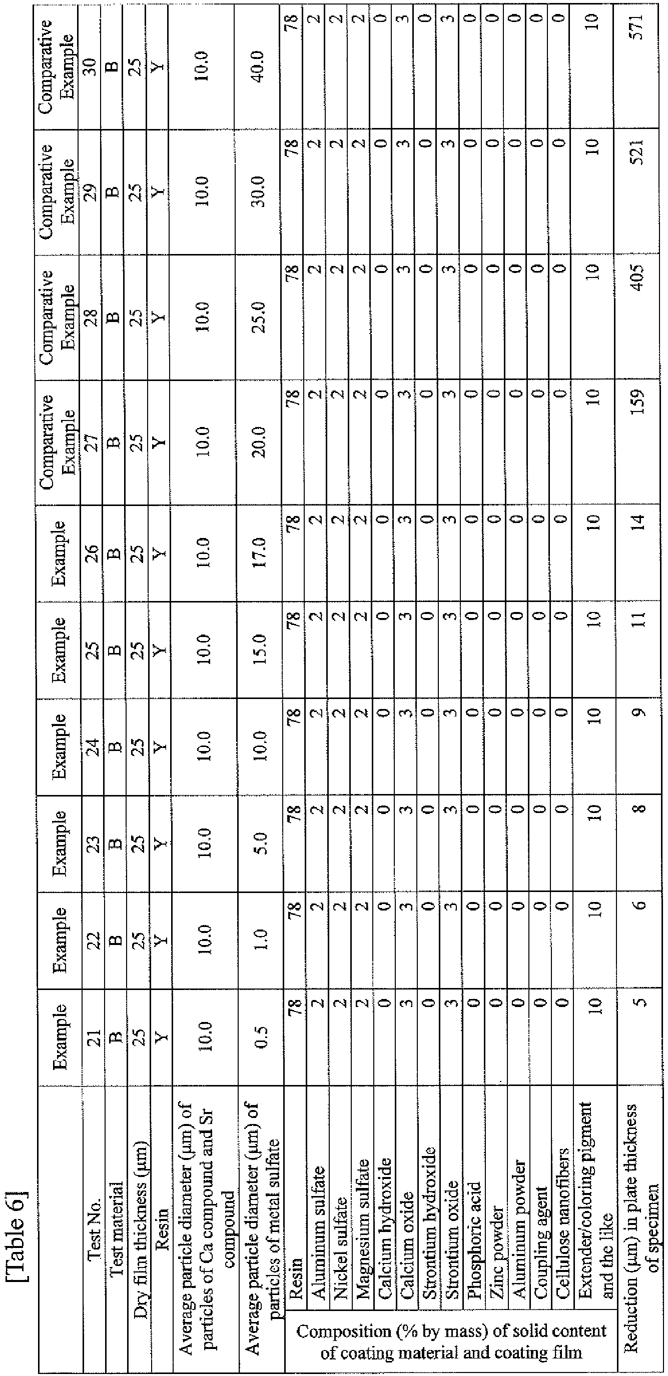

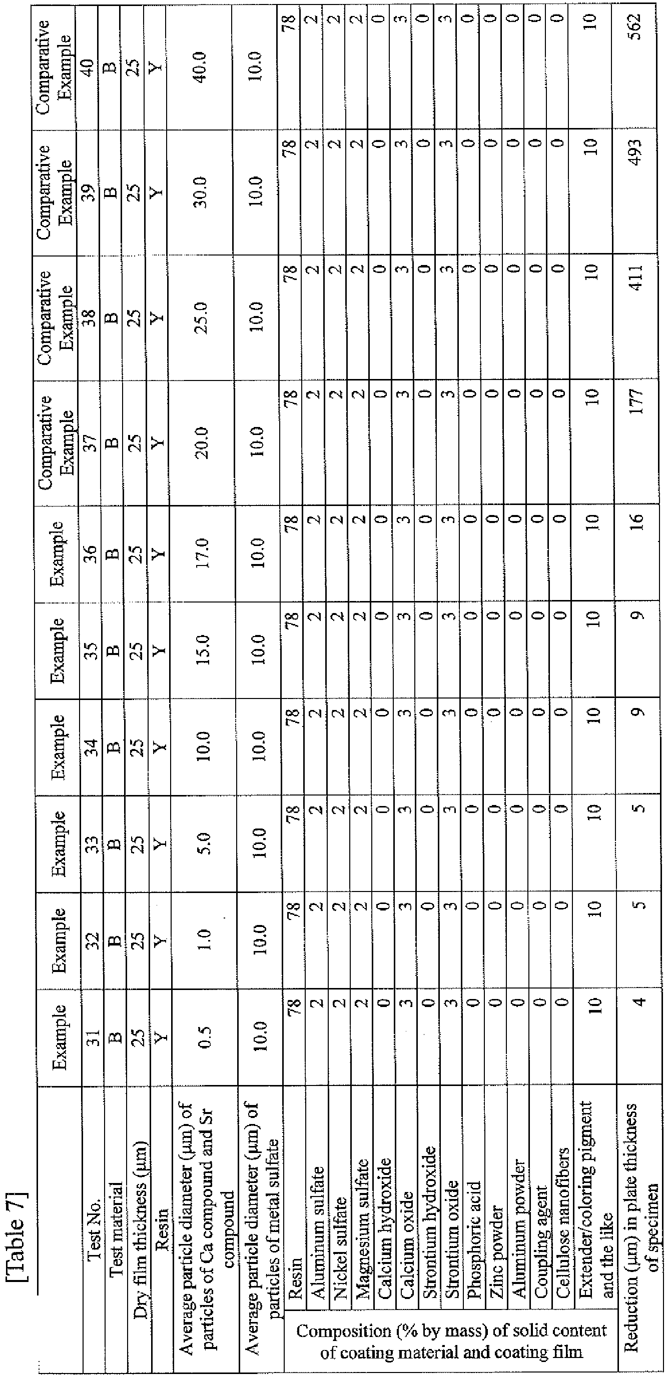

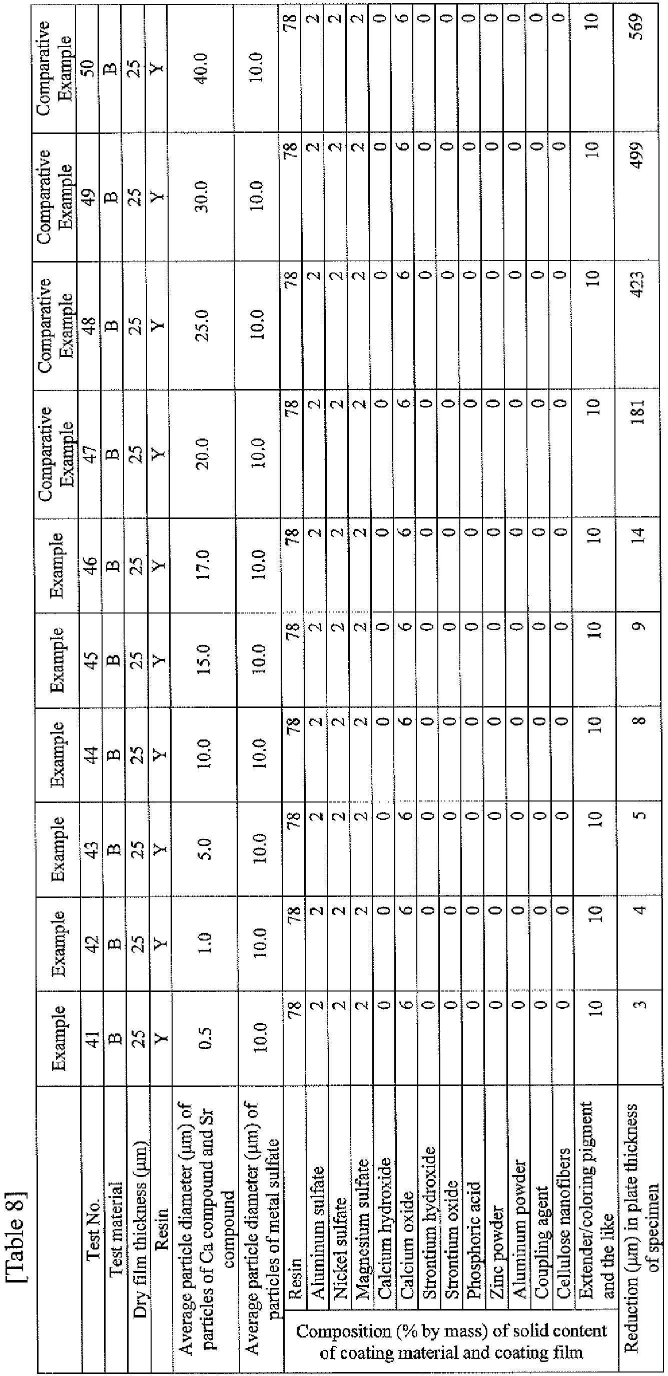

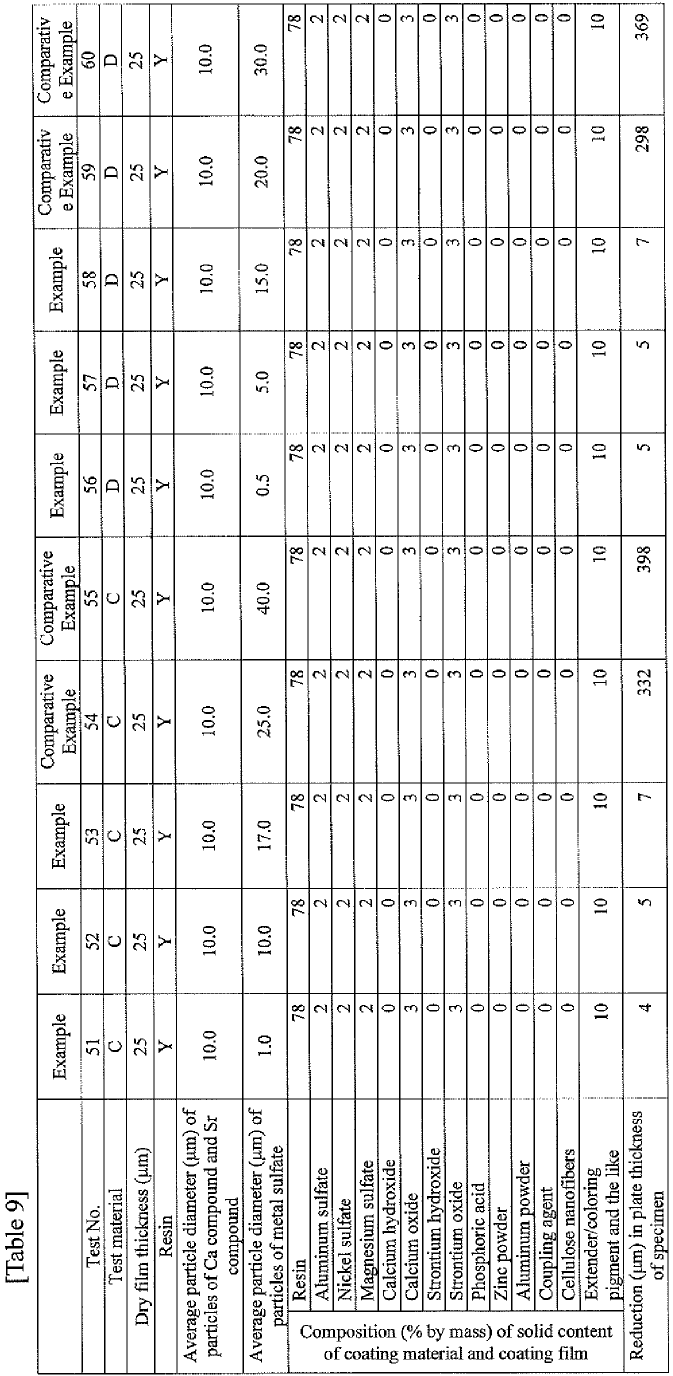

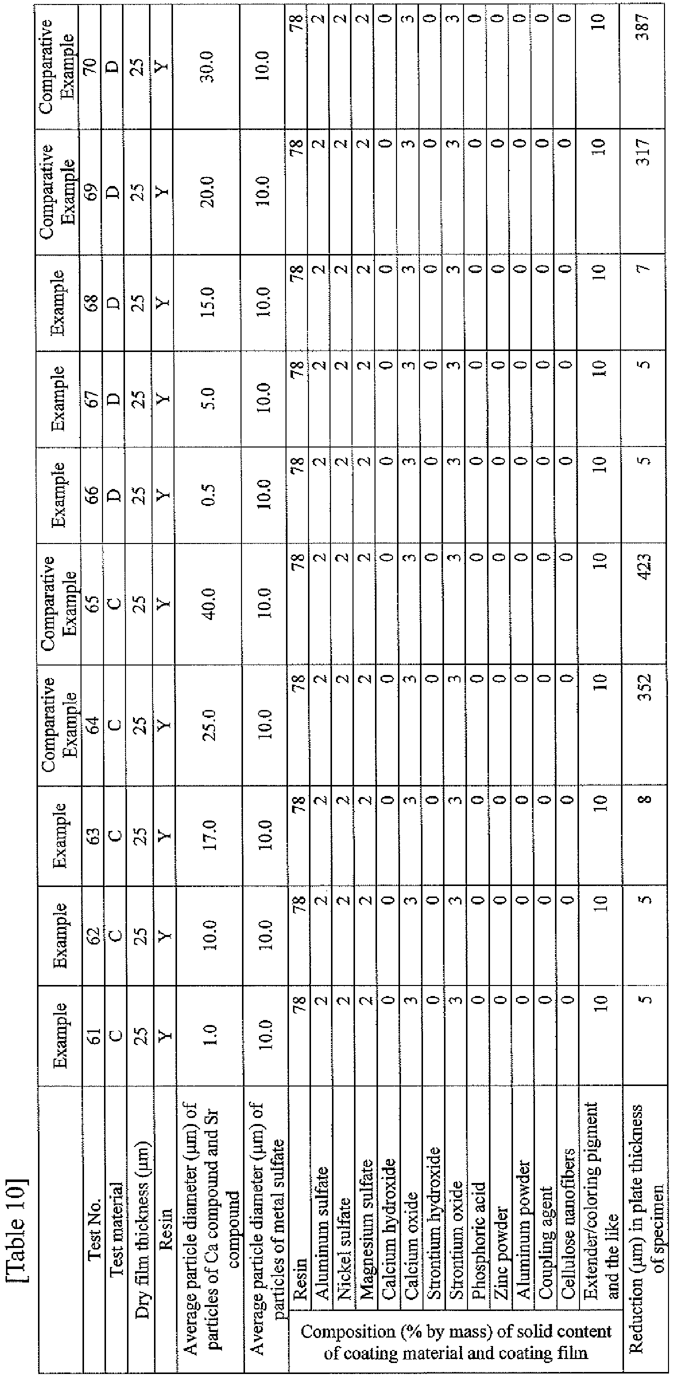

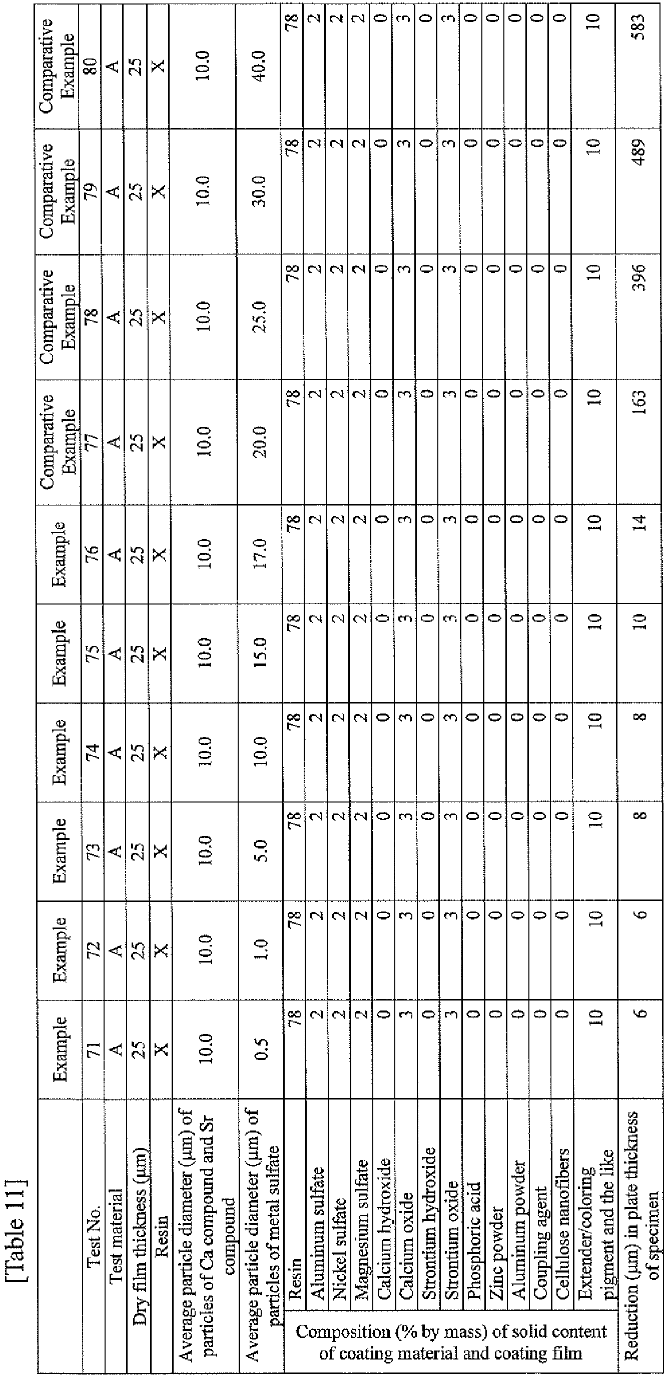

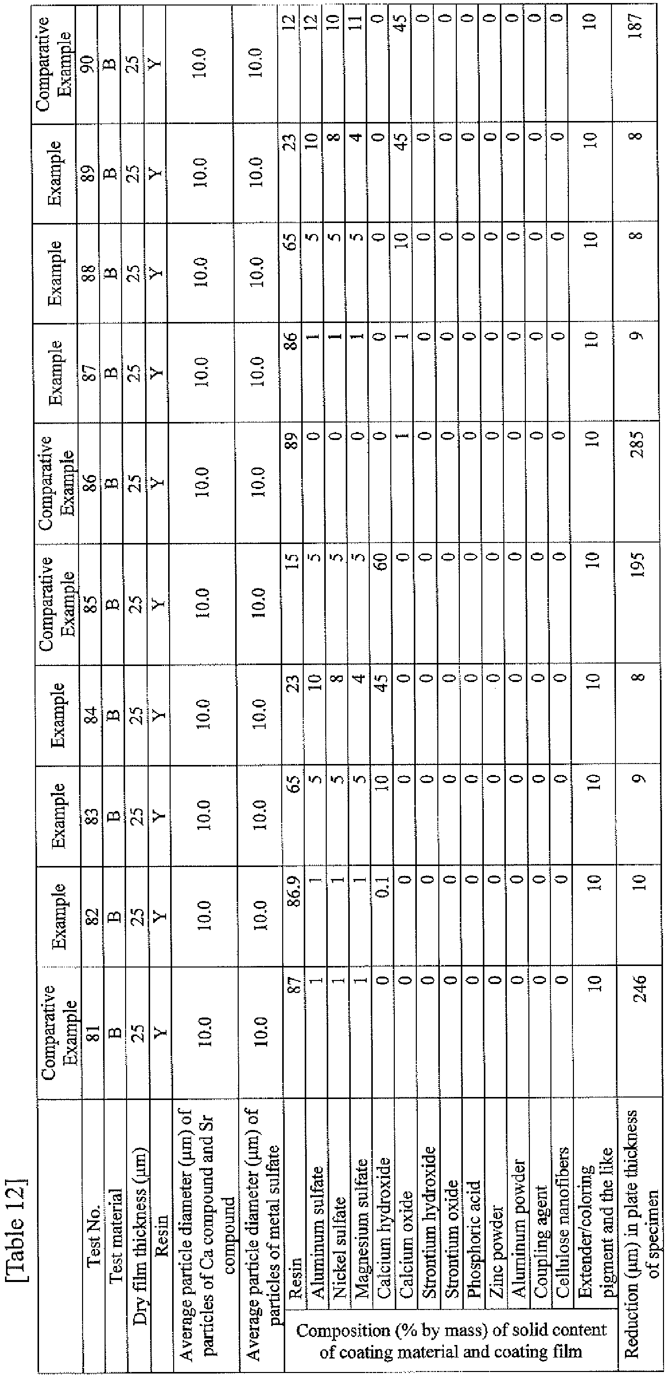

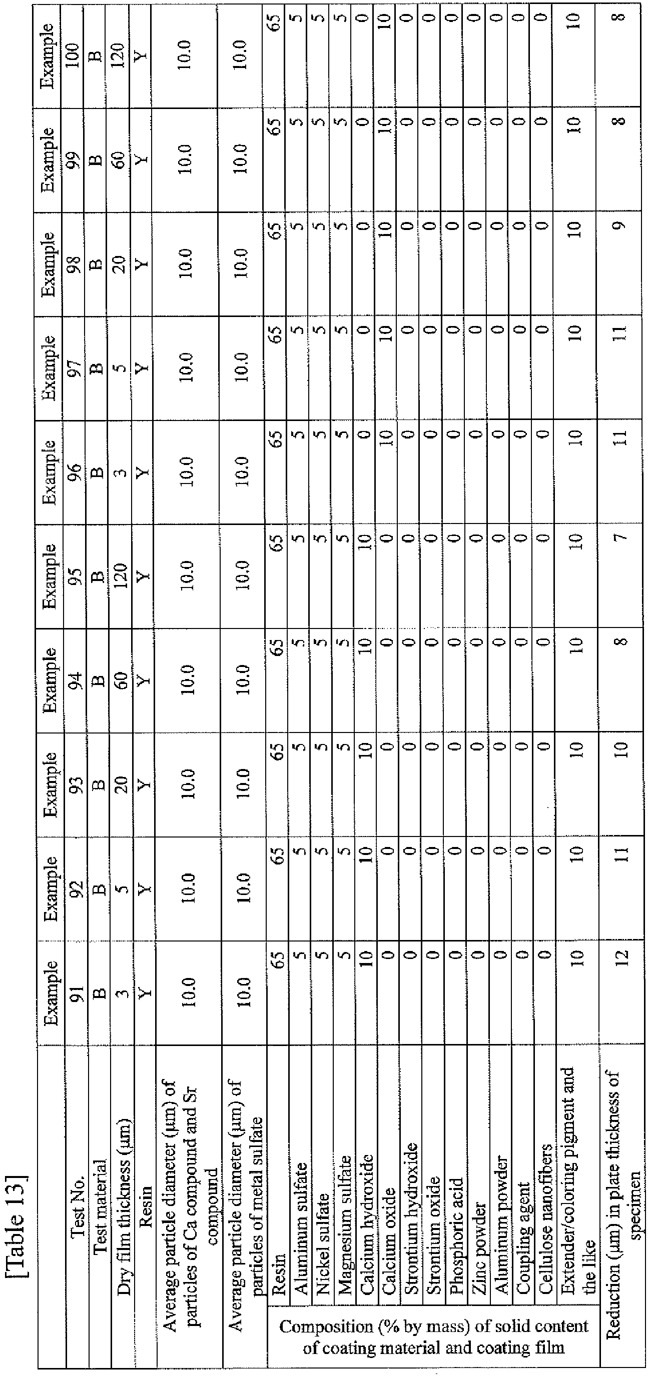

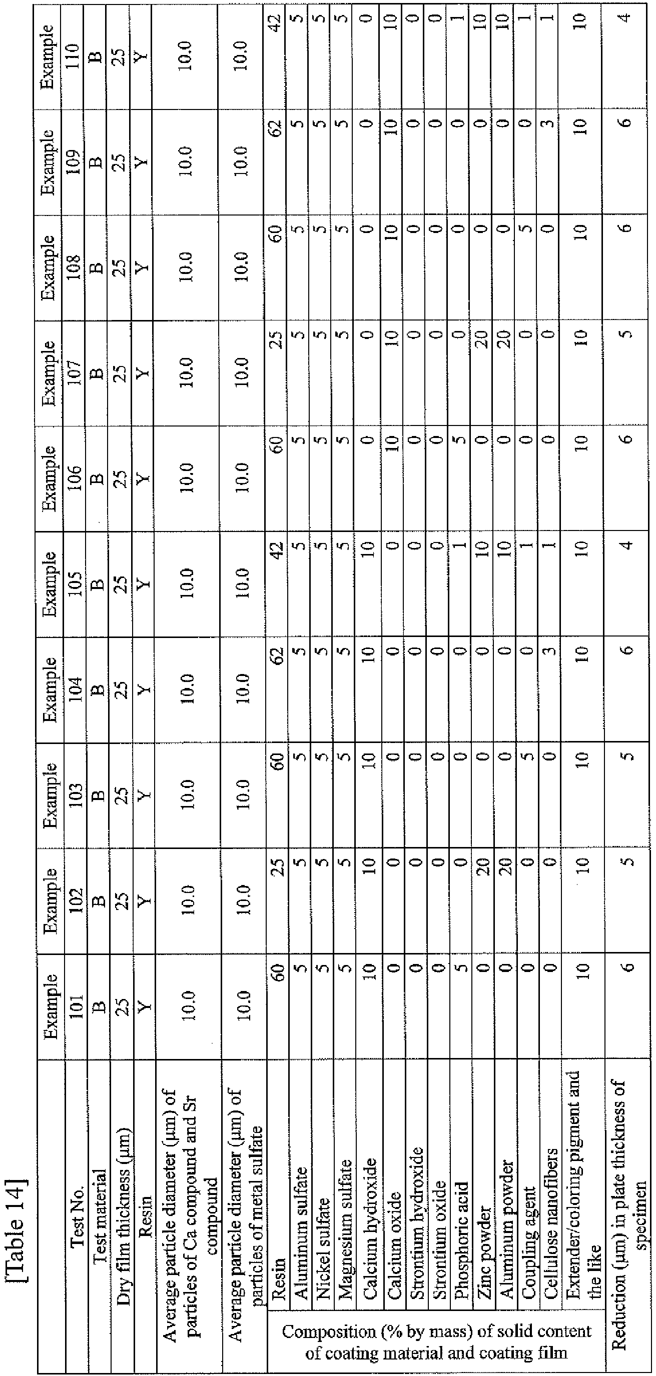

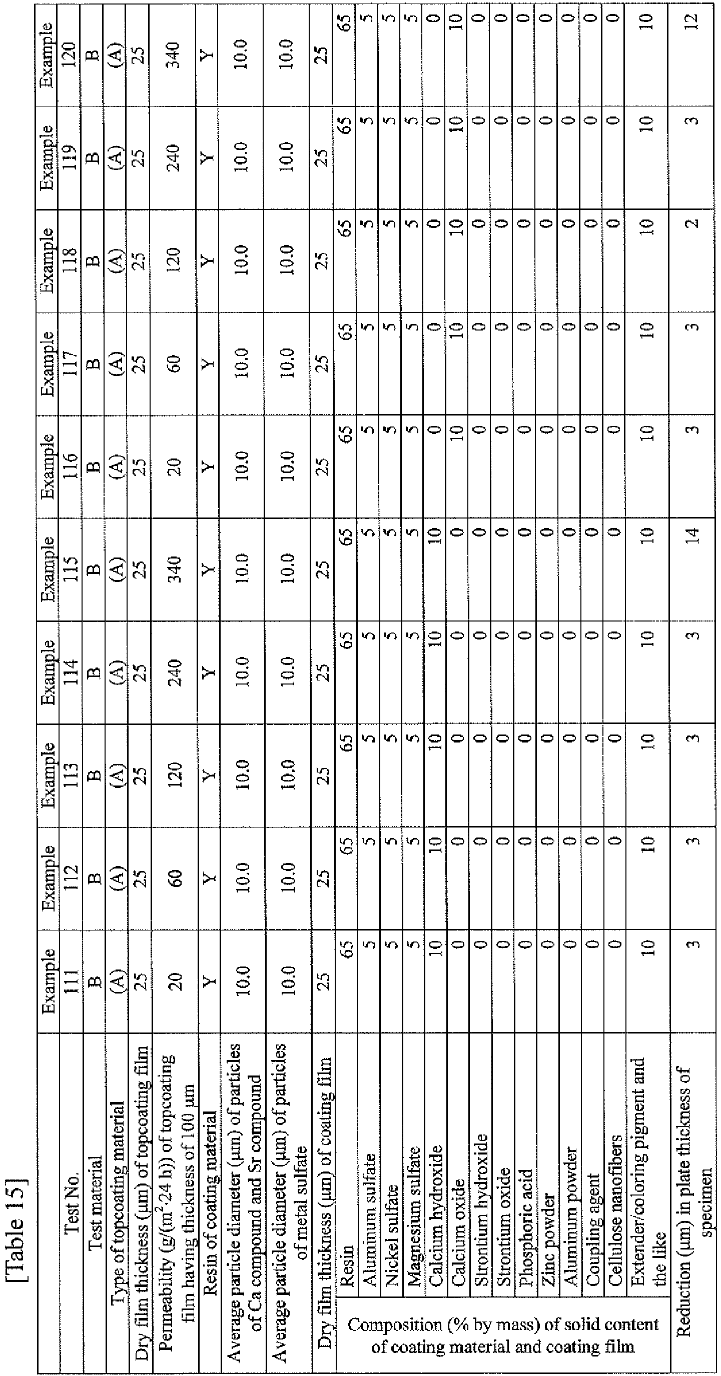

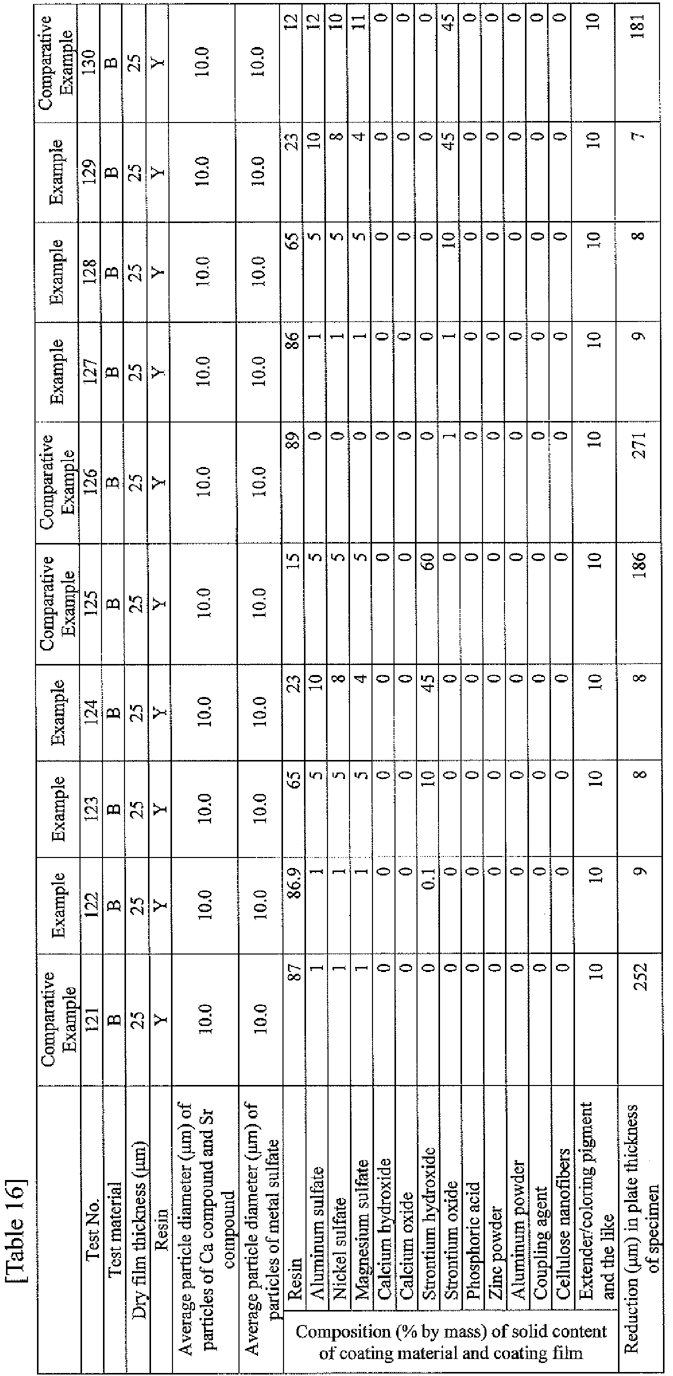

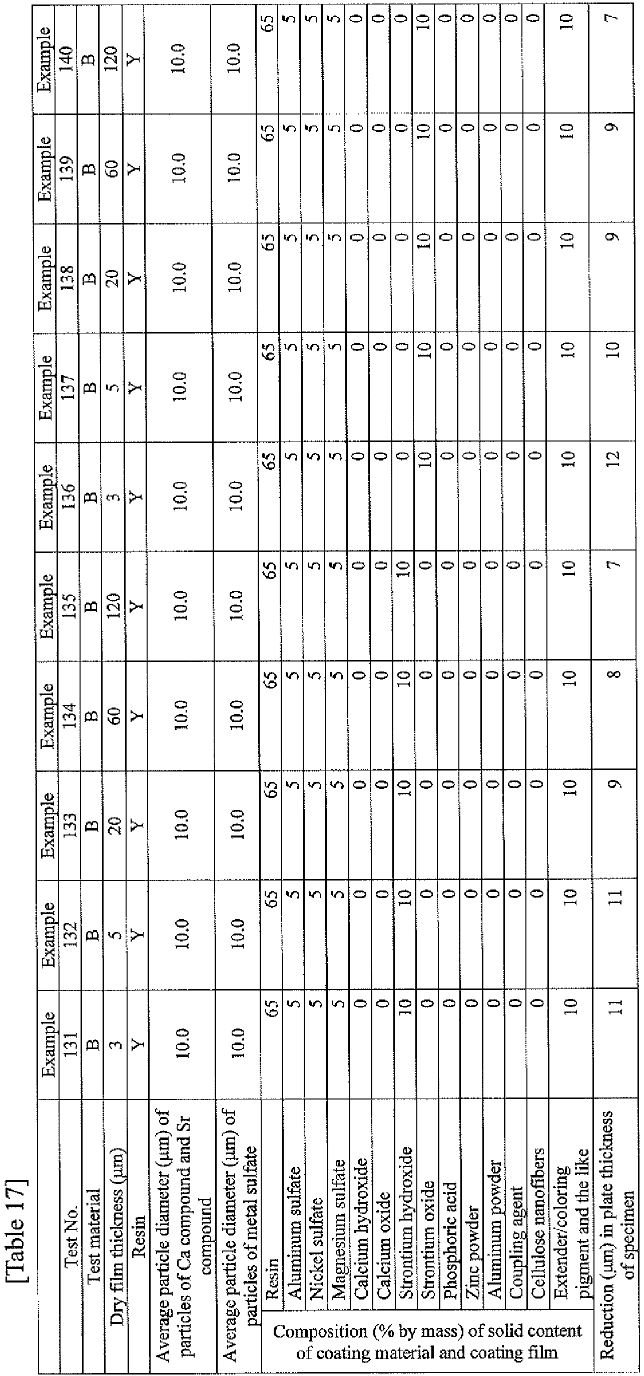

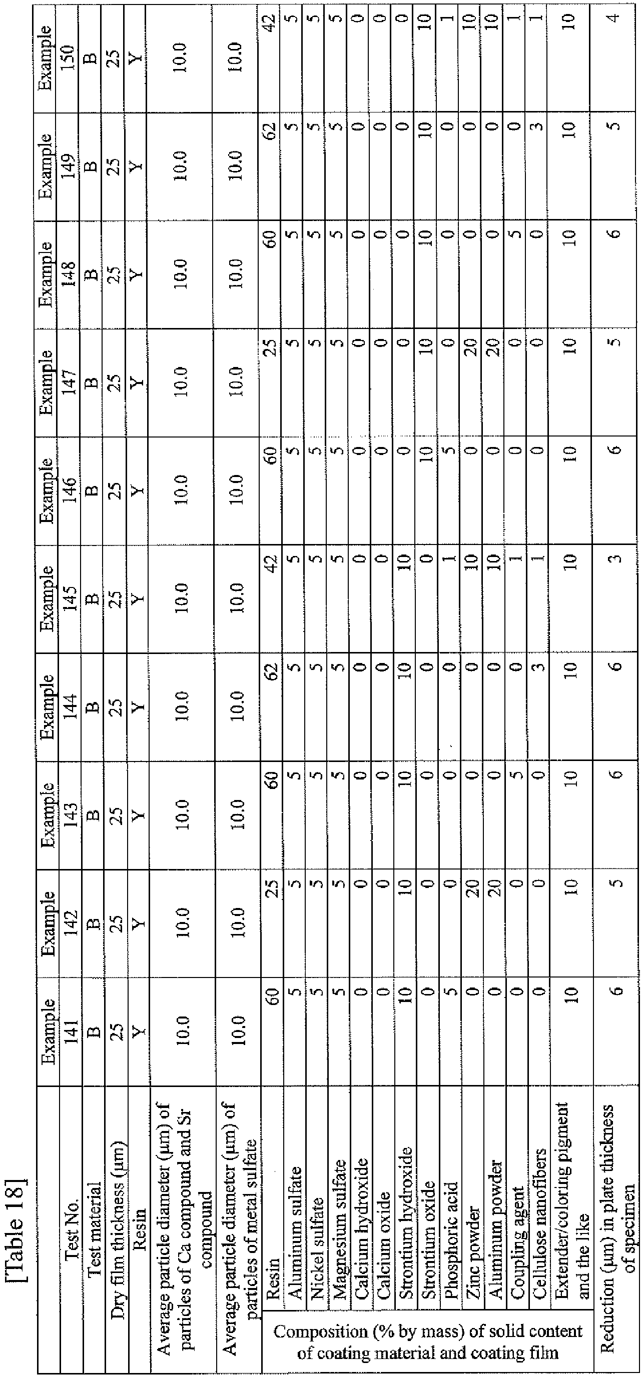

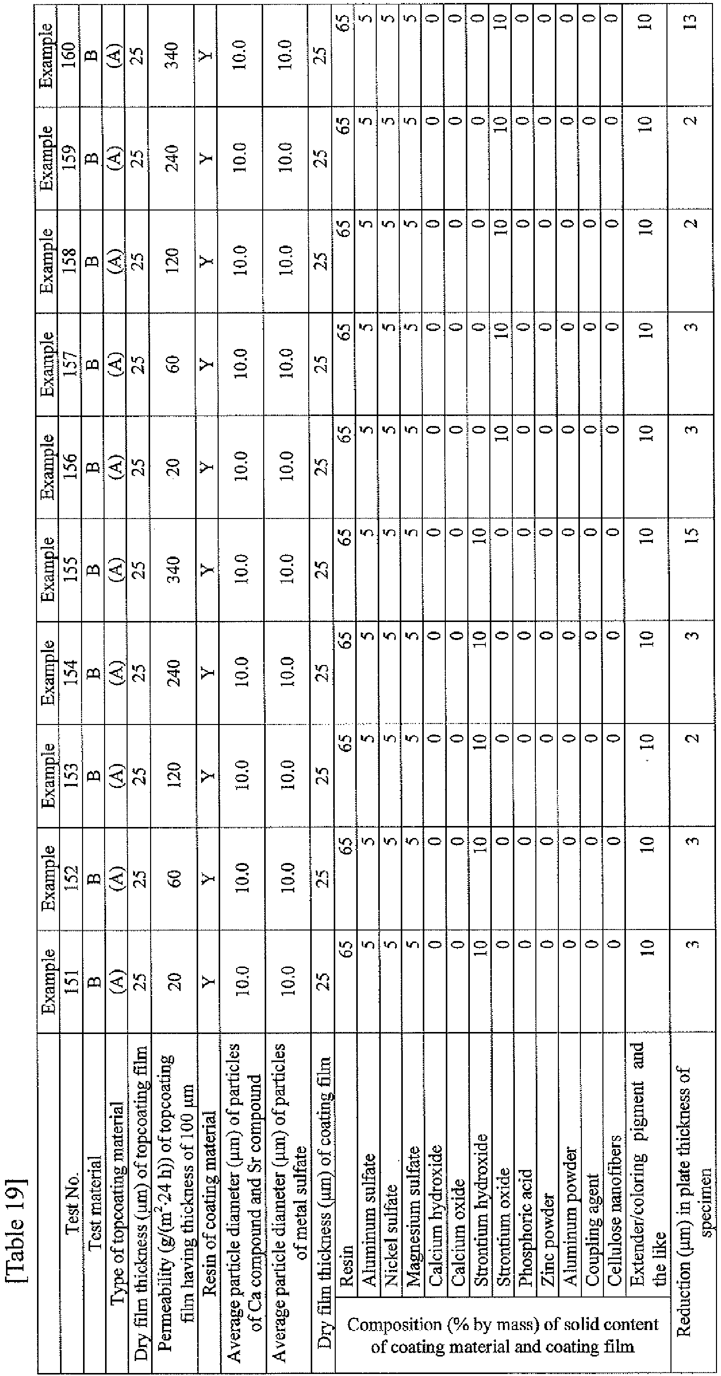

**[Table 20]**

| | Comparative Example | Comparative Example | Comparative Example | Comparative Example | Comparative Example | Comparative Example | Comparative Example | Comparative Example | Comparative Example | Comparative Example |
|---|---|---|---|---|---|---|---|---|---|---|
| Test No. | 161 | 162 | 163 | 164 | 165 | 166 | 167 | 168 | 169 | 170 |
| Coating material | Zinc-rich | Zinc-rich | Zinc-rich | Zinc-rich | Zinc-rich | Zinc-rich | None | None | None | None |
| Test material | A | A | A | B | B | B | A | B | C | D |
| Dry film thickness (µm) | 60 | 120 | 200 | 60 | 120 | 200 | - | - | - | - |
| Reduction (µm) in plate thickness of specimen | 955 | 923 | 911 | 1265 | 1020 | 995 | 3430 | 3545 | 2865 | 2655 |

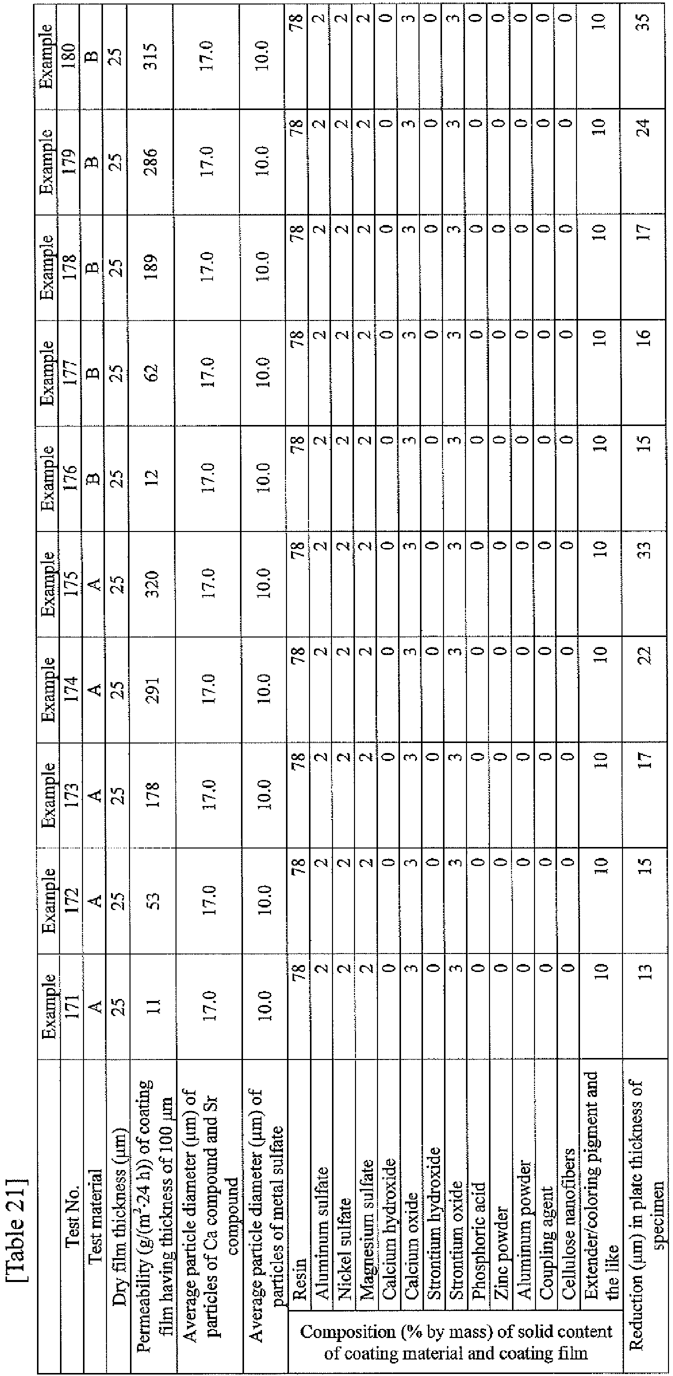

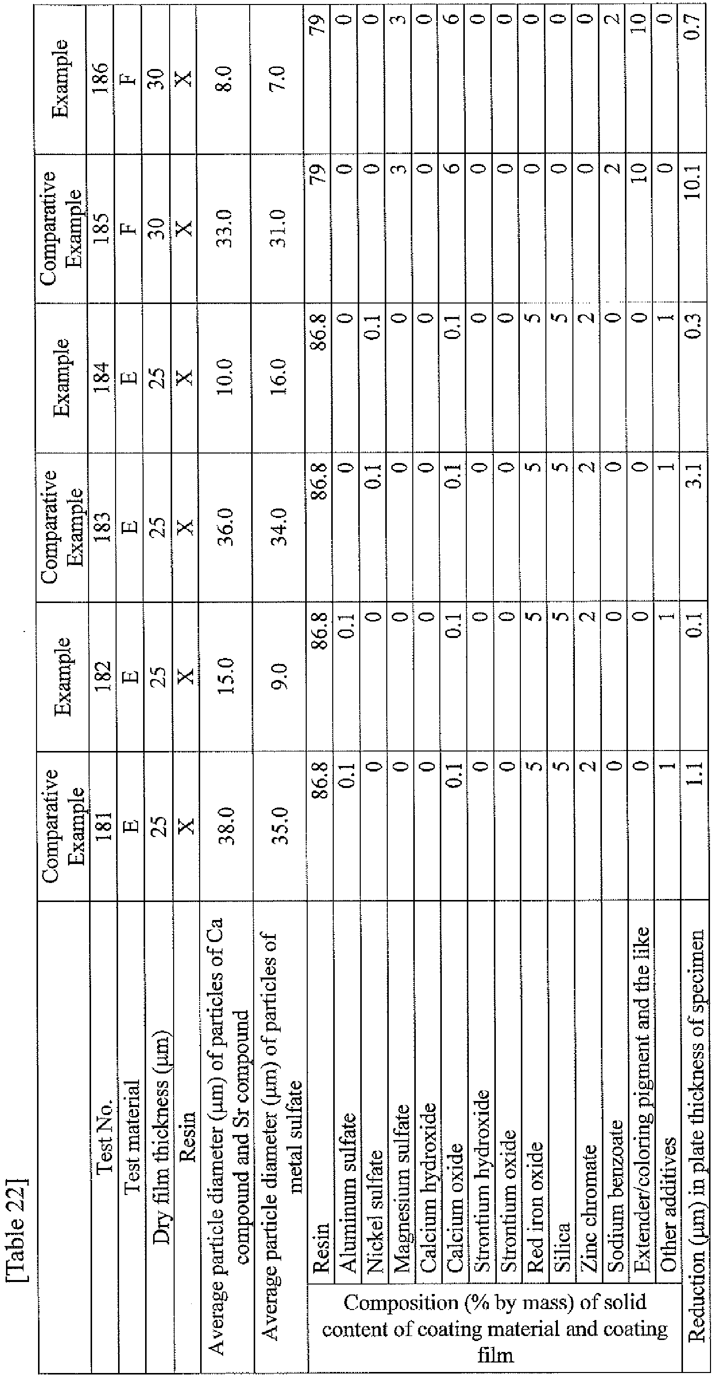

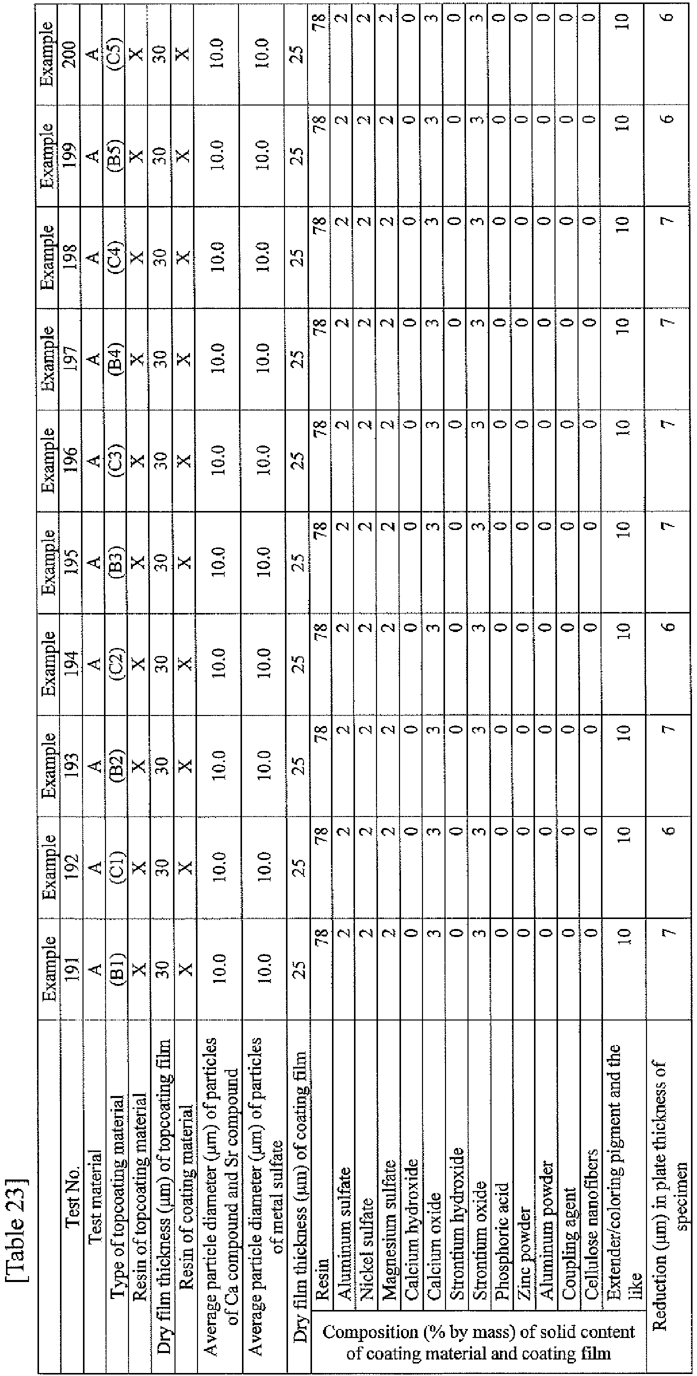

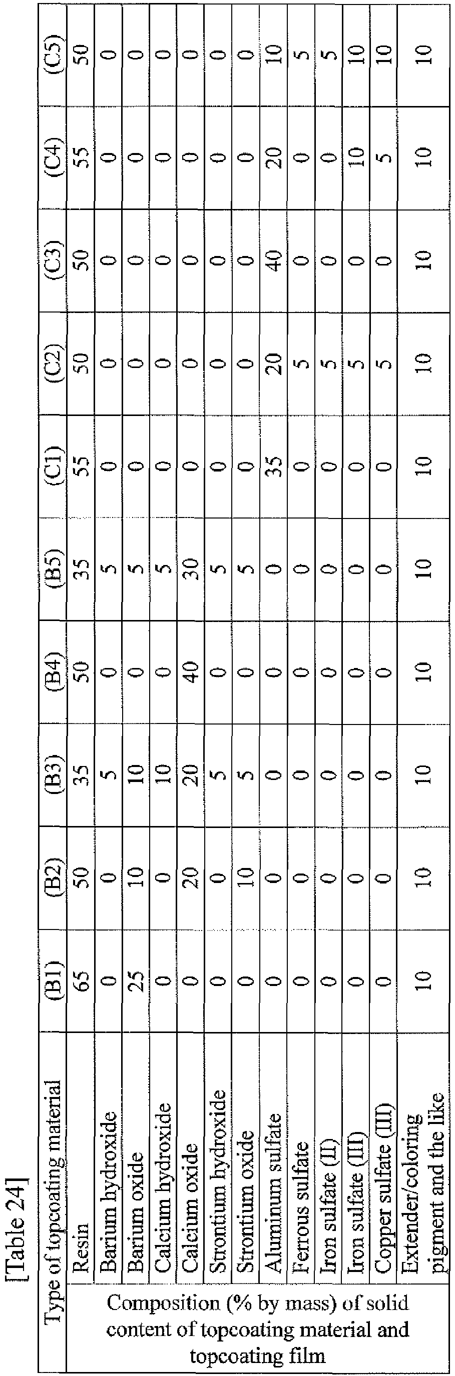

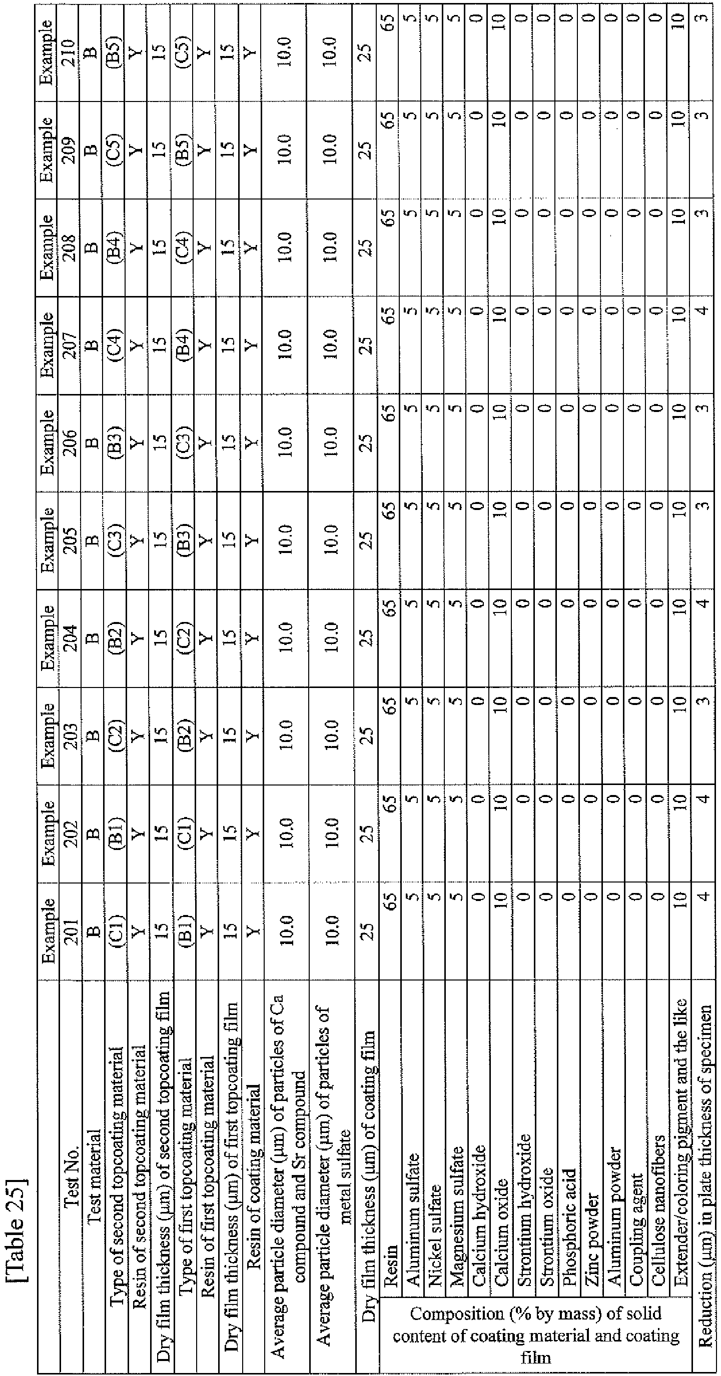

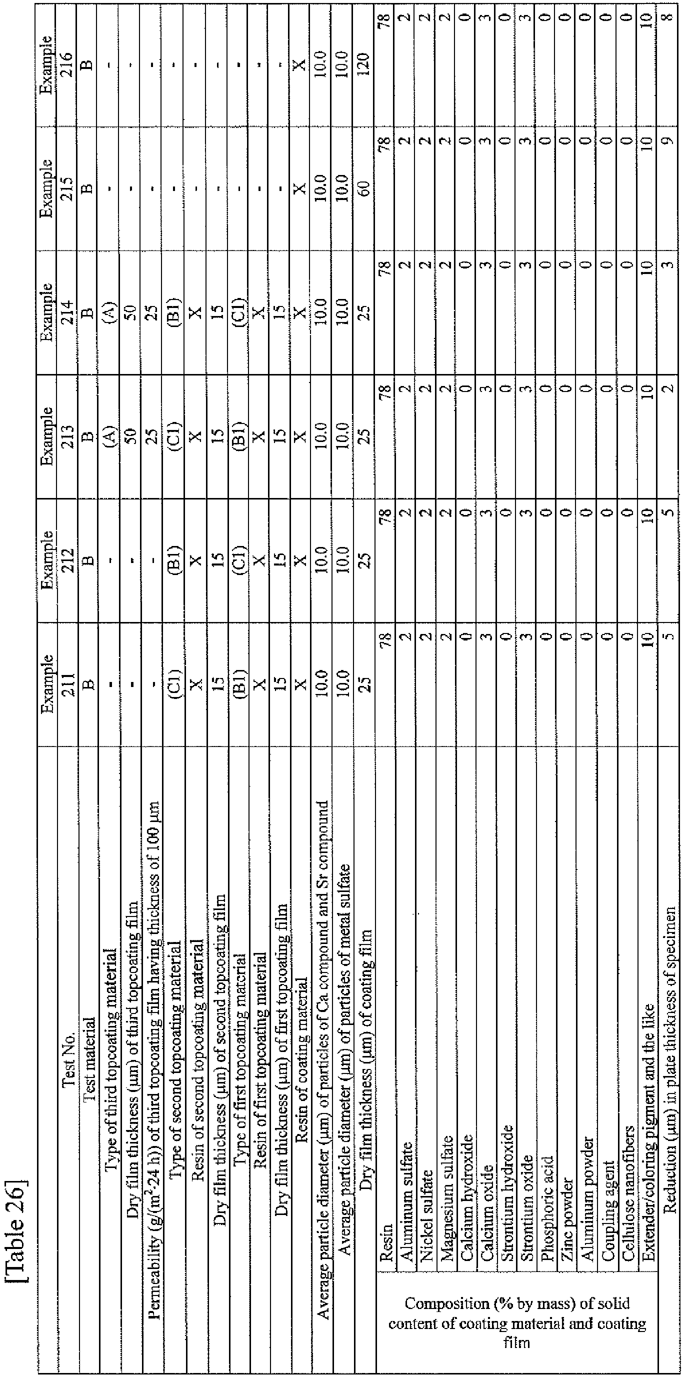

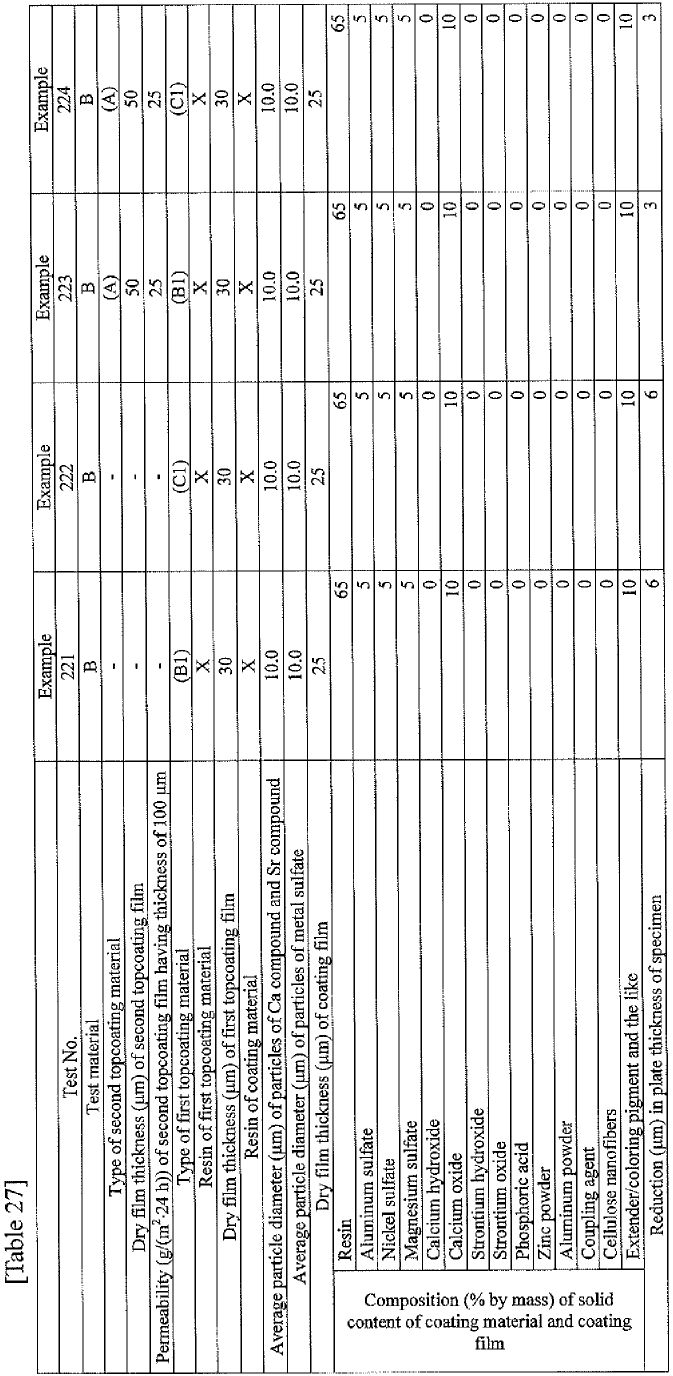

The test results revealed the following. That is, in any of cases in Examples, the reduction in the plate thickness of the specimen was extremely small, as compared with Comparative Examples; for example, in Comparative Examples 167 to 170 in which no coating had been performed, the reduction in the plate thickness was very high; and in Comparative Examples 161 and 166 in which a zinc-rich coating material had been applied, corrosion was suppressed, as compared with a case where no coating had been performed, but a large reduction in the plate thickness was shown. From these facts, it can be concluded that the coating material according to the present invention can provide high corrosion resistance for a steel material even in an acidic environment or a severe corrosive environment including chlorides.

Furthermore, in FIGS. 3 to 7, scatter diagrams in a case where reductions in the plate thickness of specimens in Examples and Comparative Examples 1 to 80 shown in each of Tables 4 to 11 were taken on the longitudinal axis, and an average particle diameter of particles of the calcium compound (Ca compound) and the strontium compound (Sr compound) and an average particle diameter of particles of the metal sulfate were taken on the horizontal axis were shown. As clearly seen from FIGS. 3 to 7, it can be confirmed that the reduction in the plate thickness of the specimen increased rapidly in the vicinity of a point where the average particle diameter of the particles of the calcium compound and the strontium compound, or the average particle diameter of the particles of the metal sulfate exceeded 17 µm.

Moreover, in the coated steel material of Examples 191 to 224, a topcoating film was further provided on the coating film, and thus, the reduction in the plate thickness was smaller, as compared with the coated steel material provided with only the coating film.. Therefore, it can be confirmed that a coated steel material has even higher corrosion resistance even in an acidic environment or a severe corrosive environment including chlorides by providing a topcoating film on a coating film, in addition to the coating film.

In addition, the corrosive environment for the above-mentioned corrosion test is a significantly strict condition, as compared with a natural corrosive environment in which the steel material is directly exposed to rainfall or sunshine in the seashore (ordinary corrosive environment). A reason therefor is, for example, that in a natural corrosive environment such as those near the seashore, seawater is almost not directly air-borne, sea-salt particles move air-borne to the steel material, and thus, corrosion proceeds easily, but on the other hand, the sea-salt particles that are air-borne deposited are washed away with rainfall.

### Reference Signs List

10: steel material, 12: plated layer, 14: plated steel material, 20: coating film, 30: anti-corrosion compound layer, 100: coated steel material, 200: corrosion-resistant steel structure.

## Claims

1. A coating material comprising:
particles of at least one compound selected from the group consisting of calcium oxide, calcium hydroxide, strontium oxide, and strontium hydroxide; and
particles of a metal sulfate,
wherein a soluble amount of the metal sulfate in 100 g of water is 0.5 g or more at 5°C,
an average particle diameter of the particles of the compound is 17 µm or less and an average particle diameter of the particles of the metal sulfate is 17 µm or less,
a content of the particles of the compound is 0.10 to 50.0% by mass with respect to a total solid content of the coating material, and
a content of the particles of the metal sulfate is 0.05 to 30.0% by mass with respect to the total solid content of the coating material.

2. The coating material according to claim 1, further comprising a coupling agent,
wherein a content of the coupling agent is 10.0% by mass or less with respect to the total solid content of the coating material.

3. The coating material according to claim 1 or 2, further comprising phosphoric acid,
wherein a content of the phosphoric acid is 10.0% by mass or less with respect to the total solid content of the coating material.

4. The coating material according to any one of claims 1 to 3, further comprising at least one metal powder selected from the group consisting of aluminum powder, zinc powder, and alloy powder containing aluminum and zinc,
wherein a content of the metal powder is 80.0% by mass or less with respect to the total solid content of the coating material.

5. The coating material according to any one of claims 1 to 4, further comprising cellulose nanofibers,
wherein a content of the cellulose nanofibers is 5.0% by mass or less with respect to the total solid content of the coating material.

6. A coated steel material comprising a steel material; and
a coating film formed on a surface of the steel material,
wherein the coating film comprises:
particles of at least one compound selected from the group consisting of calcium oxide, calcium hydroxide, strontium oxide, and strontium hydroxide; and
particles of a metal sulfate,
a soluble amount of the metal sulfate in 100 g of water is 0.5 g or more at 5°C,
an average particle diameter of the particles of the compound is 17 µm or less and an average particle diameter of the particles of the metal sulfate is 17 µm or less,
a content of the particles of the compound is 0.10 to 50.0% by mass with respect to the total amount of the coating film, and
a content of the particles of the metal sulfate is 0.05 to 30.0% by mass with respect to the total amount of the coating film.

7. The coated steel material according to claim 6,
wherein the coating film has a moisture permeability of 300 g/(m^{2.}24 h) or less at a dry film thickness of 100 µm.

8. The coated steel material according to claim 6 or 7, further comprising a topcoating film arranged on the coating film,
wherein the topcoating film includes at least one layer of (A) to (C) below:
(A) a layer which has a moisture permeability of 300 g/(m²·24 h) or less at a dry film thickness of 100 µm;
(B) a layer which contains at least one compound selected from the group consisting of barium oxide, barium hydroxide, calcium oxide, calcium hydroxide, strontium oxide, and strontium hydroxide; and does not contain a metal sulfate whose soluble amount in 100 g of water is 0.5 g or more at 5°C or contains the metal sulfate so that a ratio of the total mass of the metal sulfate to the total mass of the compound is 5.0% by mass or less; and
(C) a layer which contains a metal sulfate whose soluble amount in 100 g of water is 0.5 g or more at 5°C; and does not contain at least one compound selected from the group consisting of barium oxide, barium hydroxide, calcium oxide, calcium hydroxide, strontium oxide, and strontium hydroxide or contains the compound so that a ratio of the total mass of the compound to the total mass of the metal sulfate is 5.0% by mass or less.

9. The coated steel material according to claim 8,
wherein the topcoating film includes the layer of (B) and the layer of (C).

10. The coated steel material according to claim 8,
wherein the topcoating film includes all the layers of (A) to (C).

11. The coated steel material according to any one of claims 8 to 10,
wherein the metal sulfate in the layer of (C) exhibits a pH of 5.5 or less in an aqueous solution thereof at a temperature 5°C and a concentration of 1 mol/L.

12. The coated steel material according to any one of claims 8 to 10,
wherein the metal sulfate in the layer of (C) contains at least one selected from the group consisting of aluminum sulfate, iron sulfate (II), iron sulfate (III), copper sulfate, and chromium sulfate (III).
